# EUROPEAN PATENT APPLICATION

(11) **EP 4 538 860 A1**
(43) Date of publication of application: **16.04.2025**
(21) Application number: 24203771.1
(22) Date of filing: 01.10.2024
(51) Int. Cl.: G06F 8/30, G06N 20/00

(54) **INFORMATION PROCESSING APPARATUS, METHOD FOR GENERATING APPLICATION, AND CARRIER MEDIUM**

(30) Priority: 13.10.2023 JP 2023177815; 19.03.2024 JP 2024043594; 05.08.2024 JP 2024128741; 05.08.2024 JP 2024129038
(71) Applicant: Ricoh Company, Ltd., Tokyo 143-8555 (JP)
(72) Inventor: KONDO, Seiichi, Tokyo, 143-8555 (JP)
(74) Representative: SSM Sandmair

(57) **Abstract**

An information processing apparatus (20) that communicates with a communication terminal and a generative AI system via a network includes a chat control unit (23) and an application generation unit (25). The chat control unit (23) receives a chat message input to the communication terminal; transmit the chat message to the generative AI system; and
transmit, to the generative AI system, at least once information for calling a function to be executed for generating an application based on a parameter included in a request relating to generating the application and setting information for generating the parameter. The chat control unit (23) further receives, from the generative AI system, the request based on the received chat message, the setting information, and the information for calling the function. The application generation unit (25) executes the function to generate the application based on the parameter included in the request received from the generative AI system.

## Description

### BACKGROUND

### Technical Field

The present disclosure relates to an information processing apparatus, a method for generating an application, and a carrier medium.

### Related Art

An application is developed by programming (coding) in which a developer inputs a source code via, for example, a keyboard. Learning the syntax of the programming language and efficient programming takes a lot of time and cost. In view of this, there are techniques that assist programming to reduce or eliminate the input of program codes.

Such techniques include a programming method using artificial intelligence (AI) such as a generative AI system. For example, Japanese Unexamined Patent Application Publication No. 2023-018851 discloses a technique of acquiring text data from conversational sentences; referring to a program code database in which one or more program codes are stored in association with extracted contexts, a program syntax analysis database, and an automatic program generation knowledge database in which a processing operation to be implemented is associated with a streamlined program; and generating one or more programs corresponding to the extracted contexts.

Generating a program such as an application using an AI system still involves developing, maintaining, or operating the AI system in addition to the application, which requires effort and cost.

### SUMMARY

In one aspect, an information processing apparatus that communicates with a communication terminal and a generative artificial intelligence system via a network includes a chat control unit and an application generation unit. The chat control unit receives a chat message input to the communication terminal; transmits the chat message to the generative AI system; and transmits, to the generative AI system, at least once information for calling a function to be executed for generating an application based on a parameter included in a request relating to generating the application and setting information for generating the parameter. The application generation unit further receives, from the generative AI system, the request based on the received chat message, the setting information, and the information for calling the function. The application generation unit executes the function to generate the application based on the parameter included in the request received from the generative AI system.

In another aspect, a method for generating an application includes receiving a chat message input to a communication terminal via a network from the communication terminal, and transmitting the chat message to a generative AI system via the network. The method further includes transmitting, at least once, information for calling a function to be executed for generating an application based on a parameter included in a request relating to generating the application, and setting information for generating the parameter. The method further includes receiving, from the generative AI system, the request generated by the generative AI system based on the chat message, the setting information, and the information for calling the function; and executing the function to generate the application based on the parameter included in the request received from the generative AI system.

In another aspect, a carrier medium carrying computer readable codes which, when executed by a computer system, cause the computer system to carry out the method described above.

According to aspects of the present disclosure, an application can be generated using an external AI system.

### BRIEF DESCRIPTION OF THE DRAWINGS

A more complete appreciation of embodiments of the present disclosure and many of the attendant advantages and features thereof can be readily obtained and understood from the following detailed description with reference to the accompanying drawings, wherein:
FIG. 1 is a diagram illustrating a process from when a generative AI system requests the execution of a function (computer subroutine) in response to a chat message input by a user to when an information processing system generates an application, in an application generation system according to a first embodiment;
FIG. 2A is a diagram illustrating an example of an application creation page displayed by a user terminal;
FIG. 2B is a diagram illustrating an example of an inventory management application screen for restaurants, displayed by an inventory management application for restaurants created by a conversation in FIG. 2A;
FIG. 3 is a schematic diagram illustrating an example of a configuration of the application generation system;
FIG. 4 is a block diagram illustrating an example of a hardware configuration applicable to the information processing system, the user terminal, and a developer terminal;
FIG. 5 is a block diagram illustrating an example of functional configurations of the information processing system, the user terminal, and the developer terminal;
FIGS. 6A and 6B (FIG. 6) are diagrams illustrating an example of a request message for the information processing system to call an Application Programming Interface (API) of the generative AI system in response to "Create a daily report app." input by a user on a screen of the user terminal;
FIG. 7 is a diagram illustrating an example of a response message from the generative AI system to the request message illustrated in FIGS. 6A and 6B;
FIG. 8 is a diagram illustrating an example of a request message transmitted to the generative AI system after the information processing system generates or updates an application in the application service;
FIG. 9 is a diagram illustrating an example of a response message from the generative AI system to the request message illustrated in FIG. 8;
FIG. 10 is a sequence diagram illustrating an example of a process in which the information processing system supports application development;
FIG. 11 is a diagram illustrating an example of an application creation page displayed by the user terminal when the user develops an application;
FIG. 12 is a diagram illustrating an example of a customer management application screen displayed by a customer management application created by the conversation illustrated in FIG. 11;
FIG. 13 is a diagram illustrating a portal screen of the application service displayed by the user terminal according to the first embodiment;
FIG. 14 is a sequence diagram illustrating a first part of a process in which the information processing system generates or updates an application in the application service by using cooperation between two web browsers operating on the user terminal, according to the first embodiment;
FIG. 15 is a sequence diagram illustrating an example of a second part of the process in which the information processing system generates or updates the application in the application service by using cooperation between two web browsers operating on the user terminal, according to the first embodiment;
FIG. 16 is a diagram illustrating a process from when the generative AI system requests the information processing system to execute a function in response to a chat message input by a user to when the information processing system generates an application;
FIG. 17 is a diagram illustrating an example of functional configurations of the information processing system, the user terminal, and the developer terminal when the application service is integrated into the information processing system;
FIG. 18 is a diagram illustrating a process from when a generative AI system requests the execution of a function in response to a chat message input by a user to when an information processing system generates an application, according to a second embodiment;
FIG. 19 is a block diagram illustrating functional configurations of the information processing system, the user terminal, and the developer terminal according to the second embodiment;
FIGS. 20A and 20B (FIG. 20) are diagrams illustrating an example of a request message for the information processing system to call an API of the generative AI system in response to "Create a daily report app." input by a user on a screen of the user terminal;
FIG. 21 is a diagram illustrating an example of a request message transmitted to the generative AI system after the information processing system generates or updates an application in the application service;
FIG. 22 is a sequence diagram illustrating an example of a process in which the information processing system supports application development;
FIG. 23 is a diagram illustrating a portal screen of the application service and a chat screen displayed on the user terminal, according to the second embodiment;
FIG. 24 is a block diagram illustrating functional configurations of an information processing system and a user terminal according to a third embodiment;
FIG. 25 is a sequence diagram illustrating a first part of a process in which the information processing system generates or updates an application in the application service by using cooperation between two web browsers operating on the user terminal, according to the third embodiment;
FIG. 26 is a sequence diagram illustrating a second part of a process in which the information processing system generates or updates an application in the application service by using cooperation between two web browsers operating on the user terminal, according to the third embodiment;
FIG. 27 is a diagram illustrating a process from when the generative AI system requests the information processing system to execute a function in response to a chat message input by a user to when the information processing system generates an application; and
FIG. 28 is a diagram illustrating an example of functional configurations of the information processing system, the user terminal, and the developer terminal when the application service is integrated into the information processing system.

The accompanying drawings are intended to depict embodiments of the present disclosure and should not be interpreted to limit the scope thereof. The accompanying drawings are not to be considered as drawn to scale unless explicitly noted. Also, identical or similar reference numerals designate identical or similar components throughout the several views.

### DETAILED DESCRIPTION

In describing embodiments illustrated in the drawings, specific terminology is employed for the sake of clarity. However, the disclosure of this specification is not intended to be limited to the specific terminology so selected and it is to be understood that each specific element includes all technical equivalents that have a similar function, operate in a similar manner, and achieve a similar result.

Referring now to the drawings, embodiments of the present disclosure are described below. As used herein, the singular forms "a," "an," and "the" are intended to include the plural forms as well, unless the context clearly indicates otherwise.

Descriptions are given of an information processing apparatus, an application generation system, and a method for generating an application, as example embodiments of the present disclosure with reference to the drawings.

Supporting Development of Application Using Generative AI System

Generative AI systems such as CHATGPT are known. Generative AI systems can perform various natural language processing tasks, such as text generation, question answering, text classification, sentiment analysis, information extraction, and sentence summarization. Also known are generative AI systems such as COPILOT which proposes a code to be written next during the coding of a program. The present embodiment concerns a technique for generating an application through a conversation (also referred to as a chat) between a user and a generative AI system. A generative AI system or its functionality may be referred to simply as an artificial intelligence (AI).

In this disclosure, an external generative AI system and an application-related service may be provided by the same provider as long as the external generative AI system is separate from a system that provides the application-related service.

The following two factors are said to be barriers for users with limited expertise in developing applications.

Barrier 1: The user is not sure about what kind of application to create.

Barrier 2: Even if the user has a particular application in mind, he/she does not know how to create the application.

The barrier 1 is easily overcome because generative AI systems give ideas. Generative AI system typically learn from large amounts of text on the Internet and have knowledge of a wide variety of industries and jobs. Accordingly, generative AI systems can provide a wealth of ideas regarding the types of applications.

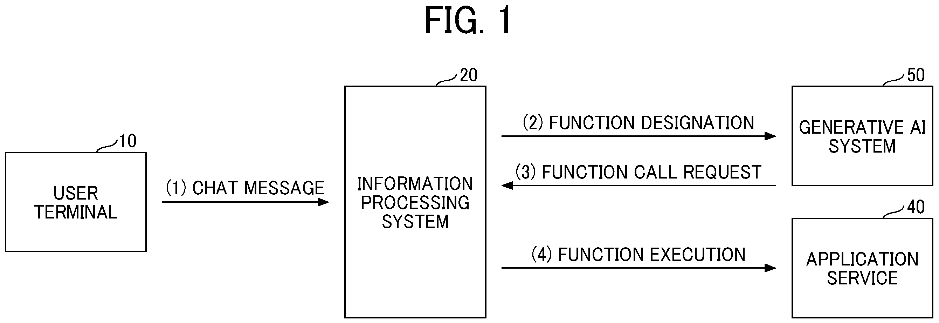

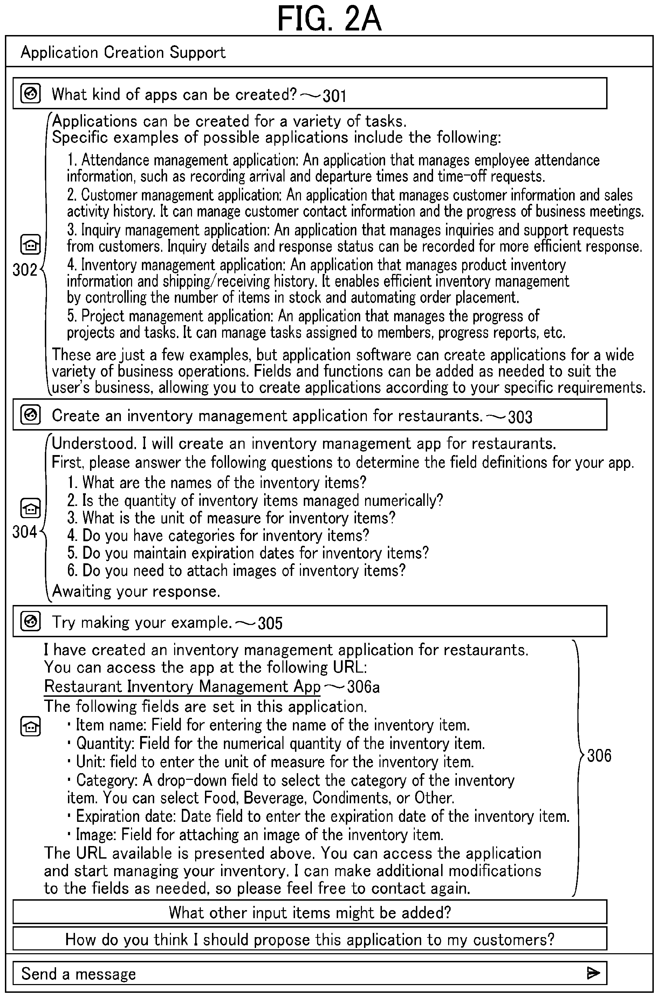

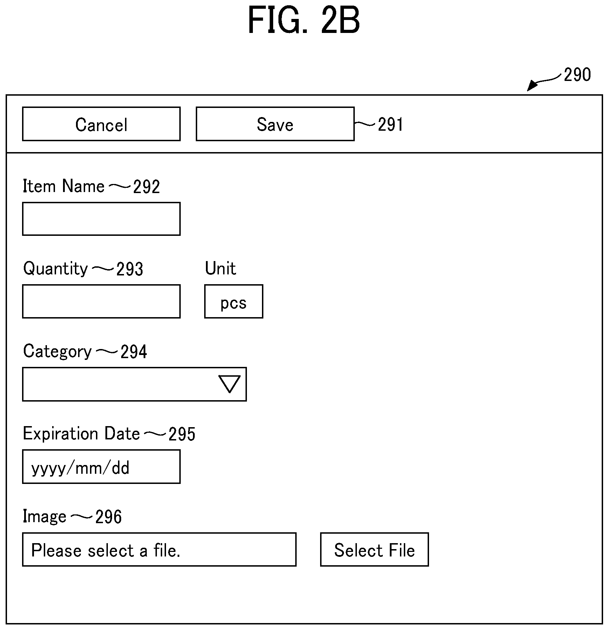

With respect to the barrier 2, AIs, including generative AI systems, are generally not able to generate applications. In the present embodiment, to overcome the barrier 2, an information processing system intervenes between the user and a generative AI system and uses a capability so-called "function calling" or "function call" for calling a function (block of code), provided by the generative AI system. A description is given with reference to FIGS. 1, 2A, and 2B.

FIG. 1 is a diagram illustrating a process from when a generative AI system 50 requests an information processing system 20 to execute a function (block of code) in response to a chat message input by a user to when the information processing system 20 generates an application. The information processing system 20 provides a user interface for a user to develop an application using the generative AI system 50. The information processing system 20 will be described in detail later. The information processing system 20 converts a chat message transmitted from a user terminal 10 into a request message for calling an application programming interface (API) published by the generative AI system 50 and the application service 40, and transmits the request message to the generative AI system 50 and the application service 40.
(1) The user terminal 10 transmits a chat message input by the user to the information processing system 20. In the present embodiment, the chat message is, for example, "Create a daily report application." The chat message is not limited to direct instructions such as "Create a daily report application" but includes messages indicating desires such as "I want a daily report application."
(2) When the information processing system 20 receives the chat message input by the user, the information processing system 20 includes the received chat message in a request message and transmits the request message to the generative AI system 50 via an API for receiving a request message provided by the generative AI system. The information processing system 20 includes the designation of function specifications in the request message transmitted. A function is a program interface that performs a defined operation with specified arguments and returns a return value as a result. This function is a block of code for enabling the generative AI system 50 to request the information processing system 20 to generate or update an application used in the application service 40. By including the function specification setting in the request message transmitted from the information processing system 20 to the generative AI system 50, the information processing system 20 can generate or update the application with minimal coding or no code in response to the request from the generative AI system 50.

The action of the generative AI system 50 requesting the information processing system 20 to call a function is referred to as a function call. The information processing system 20 can further include, in the request message, system settings for notifying the generative AI system 50 of what the application is about as supplementary information. The system settings are general policies of an application to be generated. By contrast, the function specification setting is information transmitted to the generative AI system 50 and information with which the information processing system 20 designates the specifications of the function called by the generative AI system 50.

The information processing system 20 may not include the system settings and the function specification setting in the request message that includes the received chat message. For example, the information processing system 20 may include the system settings and the function specification setting in a request message that is transmitted to the generative AI system 50 separately from the request message including the received chat message. Further, the information processing system 20 may transmit the system settings and the function specification setting to the generative AI system 50 in different request messages.

The information processing system 20 may transmit the system settings and the function specification setting each time the request message including a received chat message is transmitted, or may transmit the system settings and the function specification setting only once at the transmission of first request message including a chat message.

(3) The generative AI system 50 transmits a response message including a function call request (function call) to the information processing system 20 based on the history of conversation (chat messages), the function specification setting, and the system settings included in the transmitted request message. The generative AI system 50 only requests the information processing system 20 to call a function, and the function is executed by the information processing system 20. However, the generative AI system 50 includes a field name (an example of a parameter) corresponding to the type of application requested by the user in the request message. Examples of the field name and other items of the daily report application will be described with reference to FIGS. 2A and 2B.

The generative AI system 50 does not necessarily transmit to the information processing system 20 a response message including a function call request based on the history of conversation, the function specification setting, and the system settings. For example, the generative AI system 50 may transmit to the information processing system 20 a response message including a question or a response message indicating that the generative AI system 50 has failed to understand the chat message.

(4) The information processing system 20 generates an application in response to the function call request included in the response message transmitted from the generative AI system 50. What kind of an application is generated is determined by (2) and (3). More specifically, the information processing system 20 generates a request message for calling the API of the application service 40 from the content of the function call request, and transmits the generated request message to the application service 40. In the present embodiment, the expression "execution of a function" or "executing a function" may also refer to such a process related to the generation of a request message. In the present embodiment, the information processing system 20 generates or updates the application in the application service 40 in response to the function call request.

As described above, when the user simply inputs a chat message in natural language at the user terminal 10, the information processing system 20 can develop an application using the generative AI system 50. Accordingly, the barrier 2 is also overcome.

FIG. 2A illustrates a screen with the title "application creation support" as an example of an application creation page displayed by the user terminals 10. Screens described in this disclosure are graphic user interfaces (GUIs). On the application creation page, chat messages input by the user and reply messages from the generative AI system 50 are alternately displayed in time series. FIG. 2A illustrates an example where the entire chat history is displayed on the screen. Alternatively, the chats may scroll as the number of conversations increases.

The chat message and the reply message will be described in detail below.

A chat message 301 is a message "What kind of apps can be created?" input by the user. In a reply message 302 to the chat message 301, several applications such as inquiry management application and attendance management application are listed.

A chat message 303 is a message "Create an inventory management application for restaurants." input by the user. A reply message 304 to the chat message 303 lists questions from the generative AI system 50 in creating an application.

Specifically, the reply message 304 lists the following questions:
"Please answer the following questions to determine the field definitions for your app. What are the names of the inventory items? Is the quantity of inventory items managed numerically? What is the unit of measure for inventory items? Do you have categories for inventory items? Do you maintain expiration dates for inventory items? Do you need to attach images of inventory items?"

A chat message 305 is a message "Try making your example." input by the user. A reply message 306 is a reply message to the chat message 305 and indicates, for example, the result of creating the app. Specifically, the reply message 306 indicates the following result.

"I have created an inventory management application for restaurants. You can access the app at the following uniform resource locator (URL): An embedded URL 306a labeled with "restaurant inventory management app" The following fields are set in this application.

Item Name: Field for entering the name of the inventory item.

Quantity: Field for managing the numerical quantity of the inventory item.

Unit: Field to enter the unit of measure for the inventory item.

Category: A drop-down field to select the category of the inventory item. You can select food, beverages, condiments, or others.

Expiration Date: Date field to enter the expiration date of the inventory item.

Image: Field for attaching an image of the inventory item."

When the user presses the embedded URL 306a labeled with "restaurant inventory management app," a screen of the created restaurant inventory management application is displayed. The application screen includes, for example, fields of item name, quantity, unit, category, expiration date, and image.

FIG. 2B illustrates an example of an inventory management application screen 290 for restaurants displayed by the restaurant inventory management app (inventory management app for restaurants) created by the conversation in FIG. 2A. The inventory management application screen 290 for restaurants includes fields of item name field 292, a quantity field 293, a category field 294, an expiration date field 295, and an image field 296. These fields are generated in the conversation between the user and the generative AI system 50. Thus, the user can develop the inventory management application for restaurants by conversation with the generative AI system 50 without listing any field name.

When the user presses a save button 291, the user terminal 10 transmits a message indicating that the inventory management application for restaurants is to be saved to the application service 40. After that, the user can use the inventory management application for restaurants from, for example, a portal screen.

As described above, the application generation system 100 according to the present embodiment can develop an application from a natural language conversation between the user and the generative AI system 50. Since the information processing system 20 designates a function to the generative AI system 50, the generative AI system 50 can request the information processing system 20 to call the function together with the field name of the application. Then, the information processing system 20 generates or updates the application. Accordingly, the present embodiment can provide a no-code or low-code platform for a use to develop a daily report app by inputting a message "Create an example daily report app."

### Terms

An application is an abbreviation of an application program and is a program generated by a computer for a particular task. An operating system (OS) is general-purpose software that provides basic functionality and systems (file system, communication, display control, etc.) in the operation of a computer, whereas an application provides specific functionality on the OS. Applications include native applications and web applications. In the present embodiment, either may be developed.

An API is an interface of an application (software), and is a contact point between systems for sharing functions and mechanisms. An API defines the specifications of an interface used by applications to exchange information with each other. APIs between computers are configured such that one Web site on one computer communicates with another Web site on another computer by Hypertext Transfer Protocol (HTTP) or Hypertext Transfer Protocol Secure (HTTPS). Communication allows one web site to use the functions of another web site. An API between computers may be referred to as a Web-API.

When a request to, for example, obtain, update, delete, or process particular data is transmitted, the API returns a result (for example, data, an update result, a deletion result, or a processing result) in response to the request. The request may be referred to as a request message, and the result may be referred to as a response message. Calling an API means transmitting a request and obtaining a result in accordance with the specifications of the API. Calling an API may also be referred to as executing, operating, tapping, using, or otherwise.

Information for calling a function is information that enables a function provided by the information processing system 20 to be called from the outside of the information processing system, for example, the generative AI system 50.

The information for calling a function includes information related to the Web-API for calling the function.

The information related to the Web-API for calling a function is information for enabling the generative AI system 50 to call (use) the Web-API. This information is referred to as "function specification setting" in the following description. The function specification setting is information transmitted to the generative AI system 50 and information with which the information processing system 20 designates the specifications of a function called by the generative AI system 50. Since the generative AI system 50 calls a function in behalf of the information processing system 20 based on the function specification setting, the information processing system 20 can analyze the function.

A function is a program interface that performs a defined operation with specified arguments and returns a return value as a result. Specifications and functions (capabilities) of a function (block of code) can be designed by a developer. By contrast, APIs related to functionality that the generative AI system 50 and the application service 40 release to be used by others are prepared in advance. A function is one of specifications of an API and can be set by calling the API when the API defines a method of designating the function. Calling a function or request to call a function refers to a request to execute a function.

A chat service allows users to transmit and receive messages to each other in real-time. A generative AI system is a service that allows a user to transmit and receive messages to and from an AI in real-time.

Setting information is an overall policy for generating an application. Examples of the setting information include the description of the application, hints of the application, and items not to be asked to the user. The setting information is information that facilitates generation of a desired application when transmitted to the generative AI system 50.

System settings refer to information obtained by converting all or part of the setting information into a request message for calling an API. In other words, the system settings refer to information obtained by converting a part or all of the setting information into the format of the API.

A parameter included in the request relating to generating the application is a variable that affects the behavior of the application. The content of the parameter differs depending on the application. For example, in an application that handles a table format or a database, a parameter may specify the name of a field and the data format of the field. Further, for example, the number of rows, the number of columns, the size of rows or columns, the font or color of data displayed, and the position of a field may be specified by parameters.

A user is an end user who uses an application provided by the application service 40. The user can also develop an application. A developer is a person who performs setting necessary for application development by no-code or low-code programming on the information processing system 20. The developer sets setting information, which will be described later, in the information processing system 20.

### Example of System Configuration

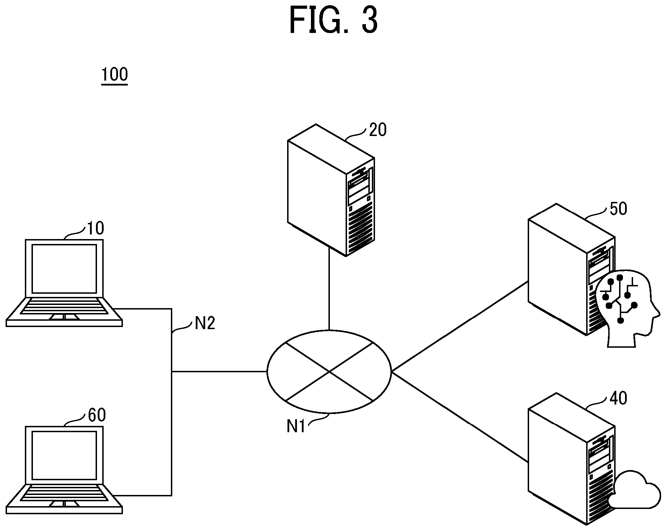

A system configuration of the application generation system 100 according to the present embodiment is described below with reference to FIG. 3. FIG. 3 is a schematic block illustrating an example of the configuration of the application generation system 100. The application generation system 100 illustrated in FIG. 3 includes the information processing system 20, the user terminal 10, and a developer terminal 60. The information processing system 20 is connected via networks N1 and N2 with the user terminal 10 and is connected via the networks N1 and N2 with the developer terminals 60 for communication. The information processing system 20 further communicates via the network N1 with the generative AI system 50 and the application service 40, which are external systems external to the information processing system 20. Further, the user terminal 10 and the developer terminal 60 communicate via the networks N1 and N2 with the generative AI system 50 and the application service 40, which is an external system.

The user terminal 10 and the developer terminal 60 are installed, for example, a company and a home and are connected to the network N2. The network N2 may be a LAN, Wireless Fidelity (WI-FI), wide-area ETHERNET, or a fourth generation (4G), fifth generation (5G), or sixth generation (6G) mobile network. The network N1 is a wide area network (WAN) such as the Internet. The user terminal 10 and the developer terminal 60 need not always to be connected to the network N2 but may be connected when the information processing system 20, the generative AI system 50, or the application service 40 are used.

The generative AI system 50 provides users with a service for conversing with an AI. As the generative AI system 50, systems using large language models (LLM) are known. Large language models are models of natural language processing trained using a large amount of text data. The generative AI system 50 takes in a huge amount of text in advance and learns knowledge from the text by, for example, deep learning or reinforcement learning. The generative AI system 50 uses this knowledge to provide a reply message to the chat message. The generative AI system 50 has an interface to receive input such as chat messages from the user. The input such as chat messages received through the interface is referred to as a prompt. The prompt includes chat messages input by the user, indicating, for example, an instruction or a question. The prompt may further include, for example, an instruction and a command generated by the information processing system 20. The chat message may be a conversational sentence or words of a natural language spoken by humans. An image may also be a chat message. The generative AI system 50 that generates a sentence for a chat message may be referred to as a generative AI. In the present embodiment, the information processing system 20 generates an application by using a reply message from the generative AI system 50 to a chat message input by the user. The application thus generated operates in the application service 40. The applications that operate in the application service 40 include web applications that operate in the application service 40 and native applications that is installed on the user terminal 10. When the application installed on the user terminal 10 is executed on the user terminal 10, the application connects to the application service 40 and executes functionality of the application service 40.

The generative AI system 50 has the following features.
1. The generative AI system 50 proceeds with the conversation in a natural way.
2. The generative AI system 50 can make a proposal by expanding ideas even in a field in which the user has no knowledge.
3. The generative AI system 50 can output correct program code.

Accordingly, the information processing system 20 can proceed with a conversation with the user through the generative AI system 50 in a natural way. Further, the user can receive ideas for an application simply by designating the application to be created. In addition, since the function called by the generative AI system 50 is correct (has high reproducibility), the information processing system 20 easily generates an application desired by the user.

As the generative AI system 50, a system using LLM such as GPT-3, GPT-4, TRANSFORMER, and BERT are known. As an example, a CHATGPT using GPT-3 or GPT-4 is usable for the application generation system 100 of the present embodiment, but a system using another LLM may be used.

The application service 40 is one or more information processing apparatuses that provide an application to be executed by a user. The application provided by the application service 40 is, for example, a database web application that manages data in a table format. The user can freely set the fields of the application and customize the application to store, read, or process data related to his/her job. The development of an application is to make settings such setting of fields desired by the user in the database prepared in advance. In the present embodiment, the information processing system 20 includes a chat message from the user in a request message transmitted to the generative AI system 50. The information processing system 20 uses the response message from the generative AI system 50 to generate or update an application in the application service 40. In other words, the user can develop an application in the application service 40 with no code by inputting chat messages.

When the application service 40 and the information processing system 20 have different domains (for example, when the service sources are different), the application service 40 and the information processing system 20 have different accounts even for the same user.

Alternatively, the application service 40 and the information processing system 20 may be parts of an integral system. In other words, the application service 40 may have the functionality of the information processing system 20, or the information processing system 20 may have the functionality of the application service 40. The application service 40 and the generative AI system 50 may be parts of an integral system. The generative AI system 50 and the information processing system 20 may be parts of an integral system. Further, the information processing system 20, the application service 40, and the generative AI system 50 may be parts of an integral system.

Examples of the application service 40 include a cloud service system, an application service provider (ASP), and Software as a Service (SaaS). The application service 40 may provide various services via networks. For example, examples of the service include providing a database and a storage service. The application service 40 may reside on the Internet or on-premises.

The information processing system 20 transmits the chat message from the user terminal 10 to the generative AI system 50. The information processing system 20 includes one or more information processing apparatuses. The information processing system 20 is a server that receives a request from the user terminal 10. A server is a computer or software that provides information and a processing result in response to a request from a client. The information processing system 20 provides a user interface to the user terminal 10, generates a request message from the received chat message, and transmits the generated request message to the generative AI system 50. Further, when the information processing system 20 receives an application generation request from the generative AI system 50, the information processing system 20 requests the application service 40 to generate an application.

The user does not have to connect the user terminal 10 to the generative AI system 50 or the application service 40.

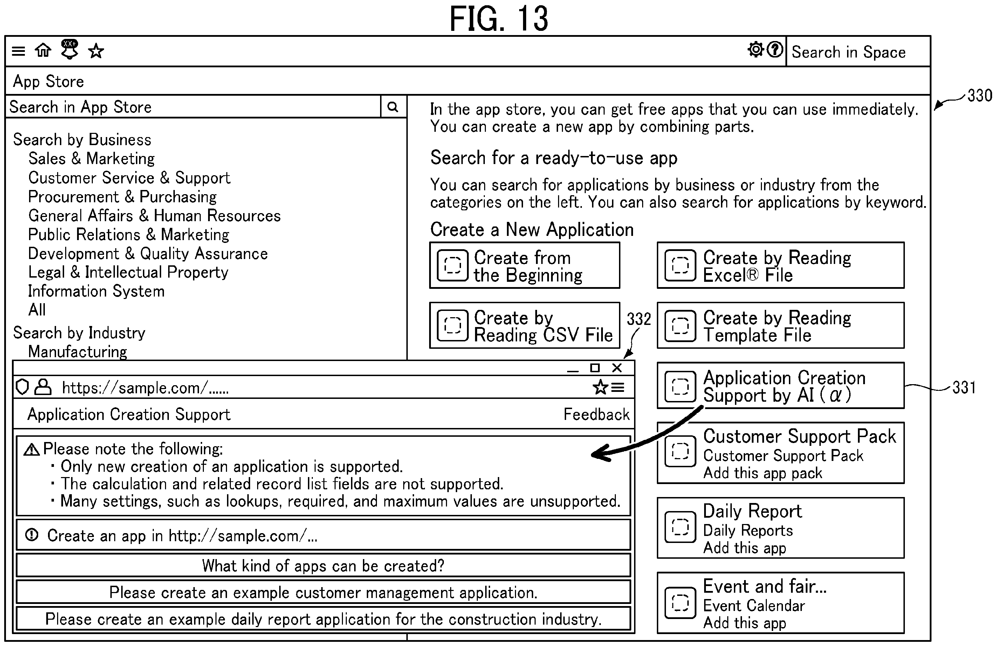

As will be described later, the user may develop an application using the application service 40 as a portal. The information processing system 20 receives a connection request to the generative AI system 50 from the user terminal 10 connected to the application service 40, and communicates with the generative AI system 50. Details of such communication will be described with reference to FIGS. 13 to 15.

The information processing system 20 receives setting of setting information from the developer terminal 60. The setting of the setting information is to set, in the information processing system 20, knowledge (setting information) for generating an application in the application service 40. The setting information is information for the generative AI system 50 to generate parameters of the application. The setting information may include, for example, what kind of application is requested to be generated. When the developer sets the setting information in the information processing system 20, the user does not need to include settings such as the parameters of the application in the chat message. The information processing system 20 can generate appropriate system settings related to the application to be generated based on the setting information and notify the generative AI system 50 of the generated system settings. The system settings are generated from the setting information. The system settings are part of or all the setting information.

The setting information is set in the information processing system 20 before the user starts developing an application. The information processing system 20 can be customized for each customer. For example, when the setting information is "you will have a conversation with a customer of XX business from now," the information processing system 20 changes XX to match the business category of the customer and notifies the generative AI system 50 of the business category name.

The information processing system 20 generates a request message to be transmitted to the generative AI system 50 using the setting information. In the request message, the setting information are reflected in the system settings described in detail later. A detailed description thereof will be given later. Since the developer transmits the setting information to the information processing system 20, the user can create an application with a simple chat message even if the user does not have technical knowledge of the application.

The setting of the setting information is not always a requisite. The setting information may be unnecessary depending on the application.

The information processing system 20 may be implemented by cloud computing or may be implemented by a single information processing apparatus. The term "cloud computing" refers to the availability of resources on a network without identifying specific hardware resources. The information processing system 20 may reside on the Internet or on-premises.

The functionality of the information processing system 20 may be allocated among multiple information processing apparatuses. Alternatively, multiple information processing systems 20 having the same functionality may be present, and the number of information processing systems may be increased or decreased in accordance with the processing load.

The user terminal 10 or the developer terminal 60 is, for example, a communication terminal (or an information processing terminal) such as a personal computer (PC), a smartphone, or a tablet communication terminal used by a user or a developer. On the user terminal 10 or the developer terminal 60, a web browser or a native application operates.

The developer operates the developer terminal 60 to generate setting information related to the application.

The user operates the user terminal 10 to input a chat message for developing an application in the application service 40. The system administrator or the user can use various services provided by the information processing system 20, the generative AI system 50, or the application service 40 by operating the developer terminal 60 or the user terminal 10.

The user terminal 10 may be any information processing apparatus. Examples of the information processing apparatus include an electronic whiteboard, an output device such as digital signage, a head-up display, an industrial machine, an imaging device, a sound collecting device, a medical device, a network home appliance, a mobile phone, a smartphone, a tablet communication terminal, a game console, a personal digital assistant (PDA), a digital camera, and a wearable PC.

### Hardware Configuration

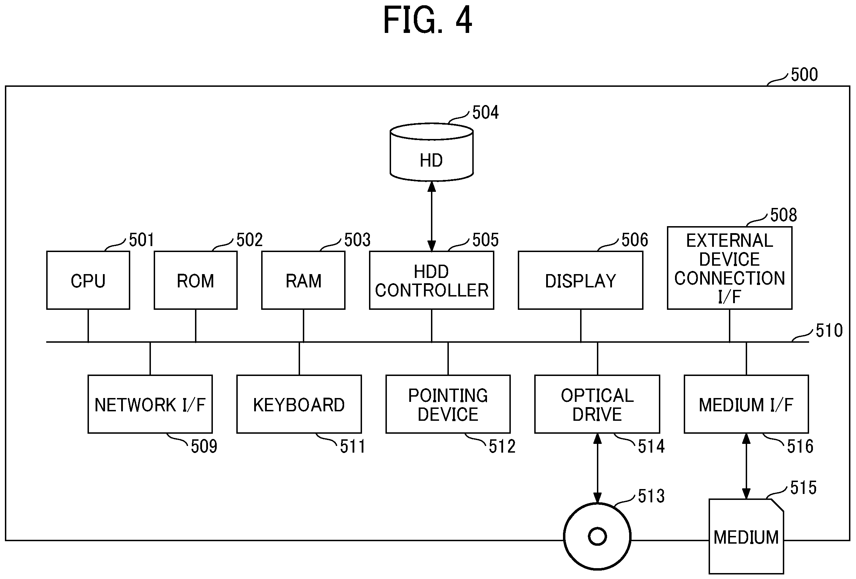

With reference to FIG. 4, hardware configurations of the information processing system 20, the user terminal 10, and the developer terminal 60 included in the application generation system 100 will be described. The generative AI system 50 and the application service 40 each have a configuration like that illustrated in FIG. 4 or a hardware configuration of an information processing apparatus suitable for cloud computing.

### Information Processing System, User Terminal, and Developer Terminal

FIG. 4 is a block diagram illustrating a hardware configuration applicable to the information processing system 20, the user terminal 10, and the developer terminal 60 according to the present embodiment. As illustrated in FIG. 4, the information processing system 20, the user terminal 10, and the developer terminal 60 each are implemented by a computer 500 and include a central processing unit (CPU) 501, a read-only memory (ROM) 502, a random-access memory (RAM) 503, a hard disk (HD) 504, a hard disk drive (HDD) controller 505, a display 506, an external device connection interface (I/F) 508, a network I/F 509, a bus line 510, a keyboard 511, a pointing device 512, an optical drive 514, and a medium I/F 516.

The CPU 501 controls the entire operation of the computer 500. The ROM 502 stores programs, such as an initial program loader (IPL), for driving the CPU 501. The RAM 503 is used as a work area for the CPU 501. The HD 504 is a storage area that stores various data such as a program. The HDD controller 505 controls an HDD to read or write various kinds of data from or to the HD 504 under the control of the CPU 501. The display 506 displays various kinds of information such as a cursor, a menu, a window, characters, or an image. The external device connection I/F 508 is an interface for connecting to various external devices. Examples of the external device include, but are not limited to, a universal serial bus (USB) memory and a printer.

The network I/F 509 is an interface for performing data communication using the network N2. The bus line 510 is, for example, an address bus or a data bus for electrically connecting the components such as the CPU 501 illustrated in FIG. 4 to one another.

The keyboard 511 is a kind of input device including multiple keys used for inputting items such as characters, numerical values, or various instructions. The pointing device 512 is a kind of input device used to, for example, select various instructions, execute various instructions, select a target for processing, and move a cursor. The optical drive 514 reads and writes various data from and to a digital versatile disc-rewritable (DVD-RW) 513, which is an example of a removable recording medium. The removable recording medium is not limited to a DVD-RW 513 but may be, for example, a digital versatile disc-recordable (DVD-R). The medium I/F 516 controls the reading or writing (storing) of data from or to a recording medium 515 such as a flash memory.

### Functions

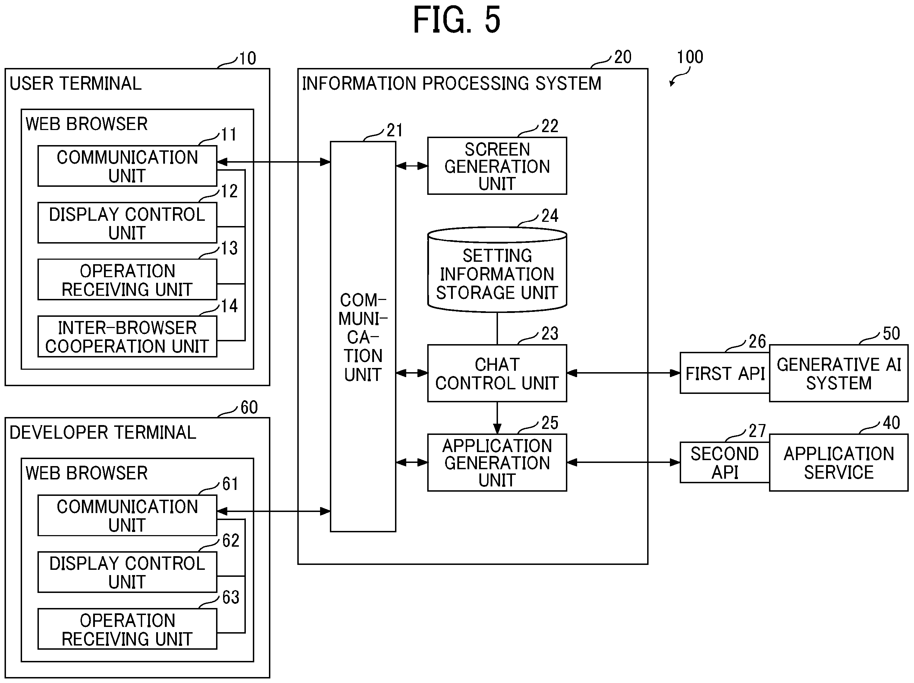

A description is now given of a functional configuration of the application generation system 100 with reference to FIG. 5. FIG. 5 is a block diagram illustrating an example of functional configurations of the information processing system 20, the user terminal 10, and the developer terminal 60.

### User Terminal

The user terminal 10 includes a communication unit 11, a display control unit 12, an operation receiving unit 13, and an inter-browser cooperation unit 14. These functional units provide functions or means implemented by the CPU 501 (see FIG. 4) executing instructions included in one or more programs installed on the user terminal 10. For example, the communication unit 11, the display control unit 12, the operation receiving unit 13, and the inter-browser cooperation unit 14 may be implemented by at least one of web browser and JAVASCRIPT. When the developer terminal 60 executes a native application, these functional units may be implemented by the native application.

The communication unit 11 transmits and receives various types of information to and from the information processing system 20. In the present embodiment, the communication unit 11 receives screen information of the portal screen from the application service 40, and receives screen information of, for example, the application creation page on which a chat message is input from the information processing system 20. The communication unit 11 transmits, for example, a chat message and operation information on the user terminal 10 to the information processing system 20. The communication unit 11 may directly communicate with the generative AI system 50.

The display control unit 12 interprets the screen information of various screens to display the contents on the display 506.

The operation receiving unit 13 receives various operations made by the user on various screens displayed on the display 506.

The inter-browser cooperation unit 14 exchanges information between web browsers. One user terminal 10 can simultaneously execute multiple web browsers. The inter-browser cooperation unit 14 can transmit information from one of multiple web browsers to the other web browser (and vice versa). When only one of the web browsers (i.e., a first web browser) holds authentication information to a specific web site (for example, the application service 40), the inter-browser cooperation unit 14 enables the other web browser (i.e., a second web browser) to communicate with the specific web site in cooperation with the first web browser holding the authentication information. It is assumed that the first web browser communicates with the application service 40 and the second web browser communicates with the generative AI system 50 via the information processing system 20. The second web browser can transmit the response message from the generative AI system 50 to the first web browser. The function of the inter-browser cooperation unit 14 is executed by the web browser (user terminal 10) and is described in JAVASCRIPT with which the inter-browser cooperation unit 14 is implemented in the screen information transmitted from the application service 40 and the information processing system 20.

### Developer Terminal

The developer terminal 60 includes the communication unit 61, the display control unit 62, and the operation receiving unit 63. These functional units provide functions or means implemented by the CPU 501 (see FIG. 4) executing instructions included in one or more programs installed on the developer terminal 60. For example, the communication unit 61, the display control unit 62, and the operation receiving unit 63 may be implemented by at least one of web browser and JAVASCRIPT. When the developer terminal 60 executes a native application, these functional units may be implemented by the native application.

The communication unit 61 transmits and receives various types of information to and from the information processing system 20. In the present embodiment, the communication unit 61 receives screen information relating to the input of setting information from the information processing system 20. The communication unit 61 transmits, for example, the setting information and operation information for the developer terminal 60 to the information processing system 20. The communication unit 21 can also communicate with the generative AI system 50 and the application service 40.

The display control unit 62 interprets the screen information of various screens to display the contents on the display 506.

The operation receiving unit 63 receives various operations made by the user on various screens displayed on the display 506.

### Information Processing System

The information processing system 20 includes a communication unit 21, a screen generation unit 22, a chat control unit 23, a setting information storage unit 24, and an application generation unit 25. The functional units of the information processing system 20 each provides a means or function indicated by their names, implemented by the CPU 501 illustrated in FIG. 4 executing instructions included in one or more programs installed on the information processing system 20. The setting information storage unit 24 is built, for example, in the RAM 503 or HD 504 illustrated in FIG. 4. The setting information storage unit 24 may not be included in the information processing system 20 but may reside on a network accessed by the information processing system 20.

The communication unit 11 transmits and receives various kinds of information to and from the user terminal 10. The communication unit 11 transmits screen information of the application creation page to the user terminal 10. The communication unit 11 receives a chat message input by the user for developing an application from the user terminal 10. The communication unit 11 transmits and receives various kinds of information to and from the developer terminal 60. The communication unit 11 transmits the screen information of an input screen of setting information to the developer terminal 60. The communication unit 11 receives the setting information input by the developer from the developer terminal 60 and stores the setting information in the setting information storage unit 24.

The screen generation unit 22 generates the screen information of the screens (web pages) displayed by the user terminal 10 and the developer terminal 60. The web page is provided as a part of a web application. The screen information is a program described in HyperText Markup Language (HTML), JavaScript Object Notation (JSON), Extensible Markup Language (XML), a scripting language, Cascading Style Sheet (CSS), or other markup and programming languages. The structure of a web page is mainly specified by HTML, the operation of the web page is defined by a scripting language, and the style of the web page is specified by CSS. The user terminal 10 may execute a native application. The native application is an application that is not executed unless the application is installed on the user terminal 10. In the case of a native application, the screen information is held by the user terminal 10, and the information to be displayed is transmitted in, for example, JSON or XML.

The chat control unit 23 calls a first API 26 to transmit a request message to the generative AI system 50. The request message includes a chat message (including a history of past conversations) and the function specification setting. The first API 26 is one or more APIs published by the generative AI system 50. The chat control unit 23 receives from the generative AI system 50 a response message to the request message as a result of calling the first API 26. The response message includes a reply message responding to the chat message, a function call request to the information processing system 20, or the URL of a created or developed application.

The application generation unit 25 calls a second API 27 to transmit a request message to the application service 40. The application generation unit 25 is implemented by the CPU 501 illustrated in FIG. 4 executing a predefined function (block of code). The request message includes parameters (field names of a database, and a data format) related to the application. The request message to the application service 40 is for requesting the generation or update of an application. The second API 27 is one or more APIs published by the application service 40. The application generation unit 25 receives from the application service 40 a response message to the request message as a result of calling the second API 27. The response message includes a result (indicating success or failure) to the request to generate or update the application. The URL of the application is returned when the generation or update of the application is successful, and an error message is returned when not successful.

The application generation unit 25 may generate an application in the information processing system 20 without requesting the application service 40. The application generation unit 25 may generate, for example, a macro that operates on spreadsheet software or may set a field in database software.

In this disclosure, "generating an application" is not limited to the generation of an application by the application generation unit 25 itself. The term "generating an application" include the generation of an application by, for example, the application service 40 in response to the request by the application generation unit 25.

### Supplemental Information on Operation of Generative AI System

In the present embodiment, the information processing system 20 calls the first API 26 published by the generative AI system 50 to use the generative AI system 50. Calling the first API 26 enables the information processing system 20 to have conversations with the AI which is one of the functions of the generative AI system 50. The generative AI system 50 has characteristic operations or processes, will be supplementarily described below.

The information processing system 20 communicates with the generative AI system 50 by transmitting to the generative AI system 50 a request message for calling the API. The request message enables the information processing system 20 to obtain the response message from the generative AI system 50.

The generative AI system 50 returns a response message to the request message to the information processing system 20. The reply message included in the response message from the generative AI system 50 is often different even if the chat message is the same. However, if the information processing system 20 specifies a parameter called "temperature" as 0, the generative AI system 50 returns the same reply message to the same chat message.

For the information processing system 20 to continue the conversation with the generative AI system 50, it is necessary to include all the history of past conversations in the request message because the conversation with the generative AI system 50 is stateless. This is a specification of a certain generative AI system 50. For another generative AI system 50, a history of past conversations may be unnecessary.

Thus, the first API 26 has no state regarding past communications (stateless). Accordingly, the user of the first API 26 (in the present embodiment, the information processing system 20) holds the history of past conversations and specifies the history every time the first API 26 is called. The history of past conversations may be held by the user terminal 10. Further, if the conversation history is too long, the first API 26 returns an error. Accordingly, the information processing system 20 preferably avoids such an error by, for example, including only the latest conversation in the request message when the conversation continues a long time.

### Function Call Returned by Generative AI System

The functionality provided by the generative AI system 50 includes "function call." The function call is an action by the generative AI system 50 of requesting the information processing system 20 to call a function. Accordingly, when the information processing system 20 instructs the generative AI system 50 to use this capability, the generative AI system 50 calls a "function."

The request message includes a function specification setting set by the information processing system 20 to instruct the generative AI system 50 to call a "function." The function specification setting enables the generative AI system 50 to perform a function call (function call request). As described above, the function specification setting is information relating to the first API 26 for calling the application generation unit 25. In other words, in the function specification setting, the information processing system 20 notifies the generative AI system 50 that the generative AI system 50 can request the information processing system 20 to call a function.

In this way, as the information processing system 20 causes the generative AI system 50 to use the function call, the generative AI system 50 calls the function provided by the information processing system 20. Then, the information processing system 20 executes the function. The information processing system 20 can have a conversation with the user by using the execution result of the function.

However, the response message of the generative AI system 50 is different every time, and the generative AI system 50 does not necessarily make a function call request. Even if the information processing system 20 includes the function specification setting in the request message, the generative AI system 50 may return the same response message as that in the case where the function specification setting is not included.

To include all the history of past conversations in the request message, it is necessary to include the result of the function executed by the information processing system 20 in the request message transmitted to the generative AI system 50. However, it is not essential for the information processing system 20 to include the execution result of the function in addition to the history of past conversations in the request message transmitted to the generative AI system 50. The information processing system 20 may transmit the execution result of the function to the user terminal 10 as it is. However, it is advantageous that the information processing system 20 transmits the execution result of the function to the generative AI system 50 because the generative AI system 50 can continue the conversation using the history of past conversations. Then, the conversation is continuous. For example, since consistency is kept in the style and wording, the user is less likely to feel odd. For example, when a native English speaker is chatting in English, the information processing system 20 does not need to translate the reply message into English.

In addition, the information processing system 20 does not know whether the generative AI system 50 will request a function call. If the information processing system 20 explicitly specifies the "function_call option" in the request message, the information processing system 20 can force the generative AI system 50 to call the function.

### Support of Application Development by Application Service

In the present embodiment, a description is given below of a request message transmitted by the information processing system 20 and a response message transmitted by the generative AI system 50 when, for example, a user develops a daily report application.

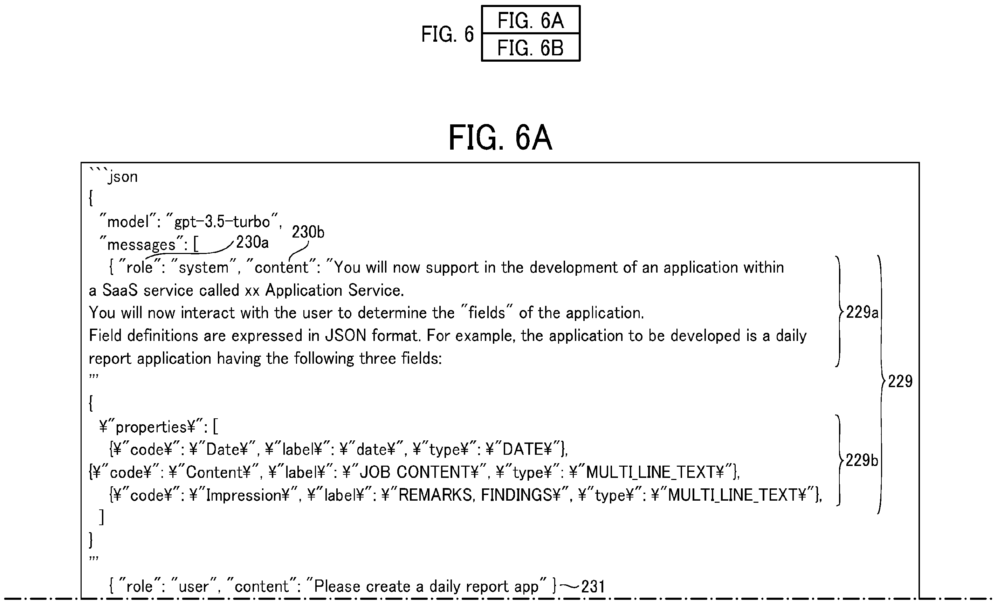

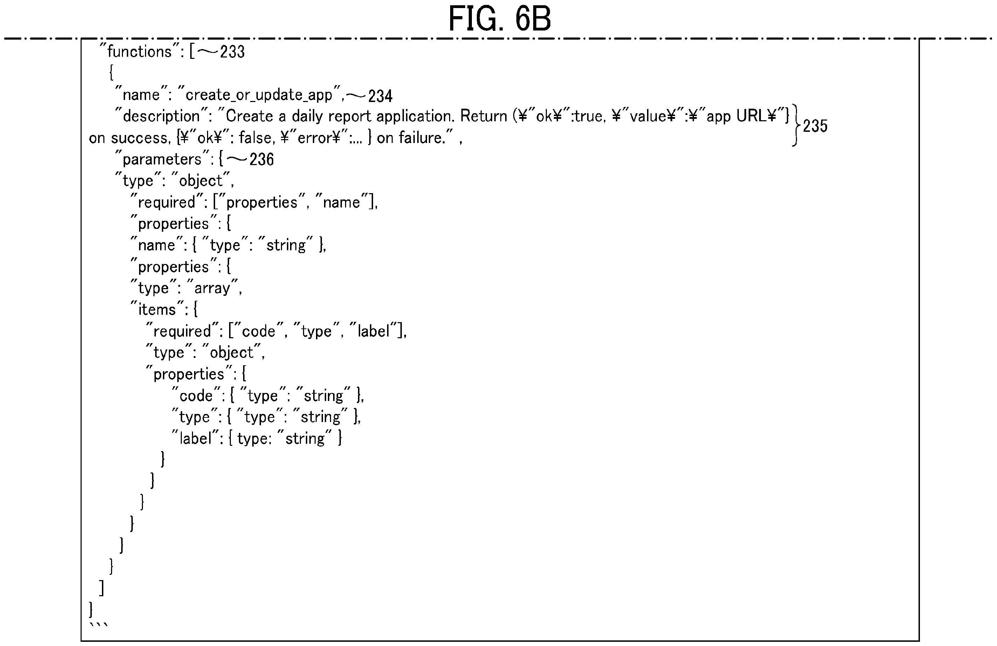

FIGS. 6A and 6B (FIG. 6) illustrate an example of the request message with which the information processing system 20 calls the first API 26 published by the generative AI system 50 when the user inputs "Please create a daily report application" on the screen of the user terminal 10. The request message includes a role 230a and a content 230b. The role 230a indicates a speaker which is either user, assistant (AI of the generative AI system 50), or system (instructing setting of AI assistant). The content 230b is the content of a conversation and may be written in a natural language.

The request message in FIGS. 6A and 6B includes system settings 229 by the system. The system settings 229 include information 229a such as: "You will now support in the development of an application within a SaaS service called xx Application Service. You will now interact with the user to determine the "fields" of the application. Field definitions are expressed in JSON format. For example, the application to be developed is a daily report application having the following three fields." The system settings 229 include information 229b indicating field names such as "date," "job content," and "remarks/findings." The data format of each field is also indicated as DATE, MULTI_LINE_TEXT, and MULTI_LINE_TEXT. The information 229a and 229b are based on the setting information transmitted to the information processing system 20 in advance by the developer.

The request message may include a chat message 231 "Please create a daily report app" input by the user.

The request message in FIGS. 6A and 6B includes a function specification setting 233. The function specification setting 233 is indicated as "functions" and has the following attributes.

A name 234 indicates the name of the function (create_or_update_app).

A description 235 indicates the specifications of the function. The details of the specifications are "Create a daily report application. Return (¥ok¥":true, ¥"value¥":¥"app URL"} on success, {"ok": false, "error":... } on failure." In other words, the description 235 instructs the generative AI system 50 to return a URL or an error message.

Parameters 236 are parts of the function specifications.

"Type": "object" indicates the data format of the return value.

"Required": ["properties," "name"] indicates an item name for the return value.

"Name": {"type": "string"} indicates the data format of "name."

"Type": "array" indicates that the data is in a table format.

"Items" and the subsequent parameters each indicate an attribute and a data format for the field.

With the function specification setting 233, the information processing system 20 instructs the generative AI system 50 notifies that the generative AI system 50 can request the information processing system 20 to call the function defined as illustrated in FIGS. 6A and 6B.

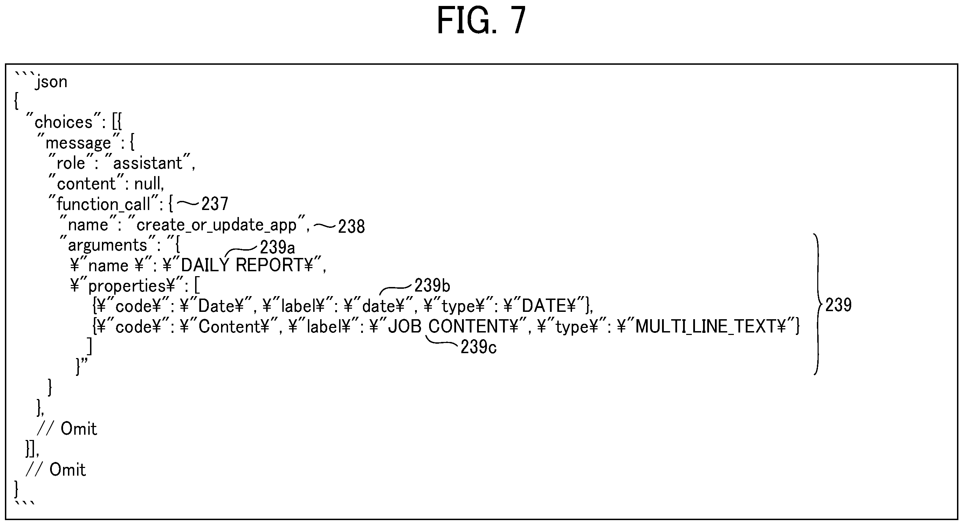

FIG. 7 illustrates an example of a response message from the generative AI system 50 to the request message illustrated in FIGS. 6A and 6B. The response message includes a function call request 237. In the present embodiment, in response to the function call included in the response message, the information processing system 20 generates the application in the application service 40. The application service 40 may be a raw-code or no-code platform. The application in the application service 40 is a database for managing user's data and allows the user to easily customize a user interface screen for displaying data. The application service 40 publishes various APIs, and the information processing system 20 can generate and update the application by calling the second API 27. In the present embodiment, the information processing system 20 can generate or update the application in the application service 40 from natural-language conversations between the user and the generative AI system 50 by calling the first API 26 published by the generative AI system 50 and the second API 27 published by the application service 40.

The function call request 237 in the response message corresponds to an application generation request. The function call request 237 includes name 238 and arguments 239. The name 238 is the name of the function defined in the function specification setting 233. The generative AI system 50 requests the call of a function having this name. The arguments 239 are return values and defined in the function specification setting 233. In FIG. 7, the arguments 239 (return values) include an application name 239a "daily report," field names 239b and 239c included in the daily report application, and their formats (e.g., DATE and MULTI_LINE_TEXT).

The generative AI system 50 specifies the field name such as job content by the function call and requests the information processing system 20 to call the function for generating an application.

The information processing system 20 analyzes the function call included in the response message, and determines to generate or update the application in the application service 40 (execution of the function). Accordingly, the information processing system 20 calls the second API 27 published by the application service 40 and generates or updates the application by using parameters such as the field name and the date format included in the response message. When the application is successfully generated or updated, the information processing system 20 obtains the URL of the application from the application service 40. The URL is access information for the user terminal 10 to access the application. The information processing system 20 returns the URL of the application to the generative AI system 50. This creates continuity in the conversation between the user and the generative AI system 50.

Specifically, the following example in which the information processing system 20 uses three APIs of the application service 40 is conceivable.
(1) API for generating an application published by the application service 40;
(2) API for adding two fields of "date" and "job content" to the application created in by (1); and
(3) API for publishing the application.

When the application is successfully generated or updated, the information processing system 20 calls the first API 26 published by the generative AI system 50 again by designating the result of the function (the URL of the application).

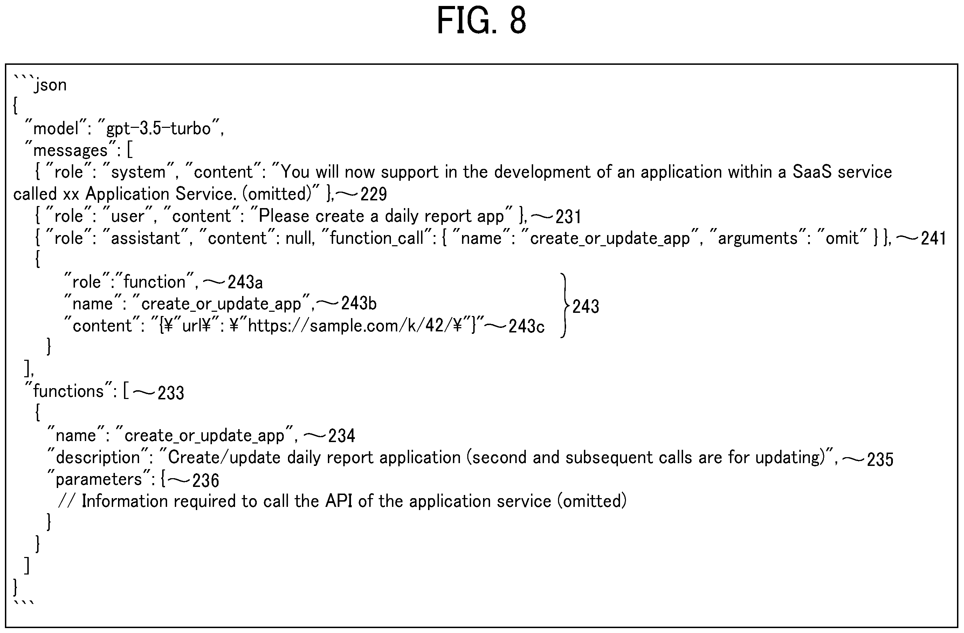

FIG. 8 illustrates an example of a request message transmitted from the information processing system 20 to the generative AI system 50 after the information processing system 20 generates or updates an application in the application service 40. The request message includes the system settings 229, the chat message 231, and a function call request 241 as the history of past conversations. The information processing system 20 adds a function execution result 243 to the history of past conversations. The function execution result 243 in FIG. 8 includes a text 243a indicating that the function has been executed, a name 243b (create_or_update_app) indicating the name of the function executed, and a URL 243c. The function specification setting 233 included again in the request message illustrated in FIG. 8 is also a part of the history of past conversations. Although the function specification setting 233 is included as a history of past conversations in FIG. 8, the function specification setting 233 may not be included depending on the specifications of the API provided by the generative AI system 50.

In FIG. 8, the history of past conversations (the system settings 229, the chat message 231, the function call request 241, the text 243a indicating that the function has been executed, and the name 243b indicating the function name) is included in addition to the URL 243c. Alternatively, when the generative AI system 50 holds the history of past conversations, the information processing system 20 may transmit only the URL 243c to the generative AI system 50. In other words, in some cases, it is sufficient that the history of past conversations is transmitted from the information processing system 20 to the generative AI system 50 at least once.

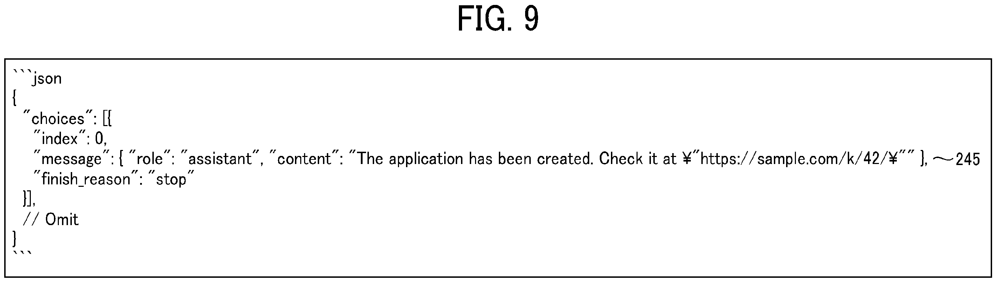

FIG. 9 is an example of a response message from the generative AI system 50 to the request message of FIG. 8. In the case of application development, the response message is often different every time. For example, it is expected that the response message as illustrated in FIG. 9 is returned. The response message in FIG. 9 includes a reply message 245 "An application has been created. Check from ¥"https://sample.com/k/42/¥." Since the information processing system 20 transmits the URL to the user terminal 10, the user can check, for example, the field name of the developed application (database) by pressing the URL.

After this response message, the input of the chat message and the exchange of messages (request messages and response messages) between the information processing system 20 and the generative AI system 50 are repeated until the user is satisfied. In this way, the user can develop an application in the application service 40 in an interactive manner without any programming knowledge.

### Operation or Processing

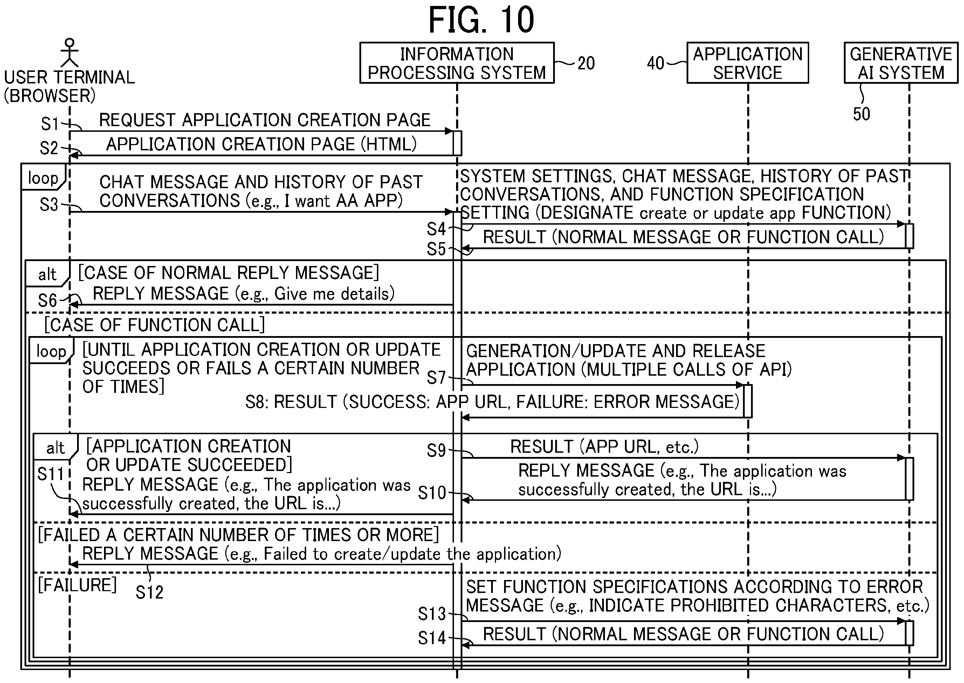

FIG. 10 is a sequence diagram illustrating an example of a process in which the information processing system 20 supports application development. Steps S3 to S14 are repeatedly executed as a major process, and steps S9 to S14 are repeatedly executed in the major process.

S 1: The communication unit 11 of the user terminal 10 connects to the URL of the information processing system 20. The user may designate the URL by directly inputting the URL in the user terminal 10 or by executing a shortcut in which the URL is designated. The communication unit 11 of the user terminal 10 generates a Hypertext Transfer Protocol (HTTP) request including the URL of the application creation page, and transmits the generated HTTP request to the information processing system 20.

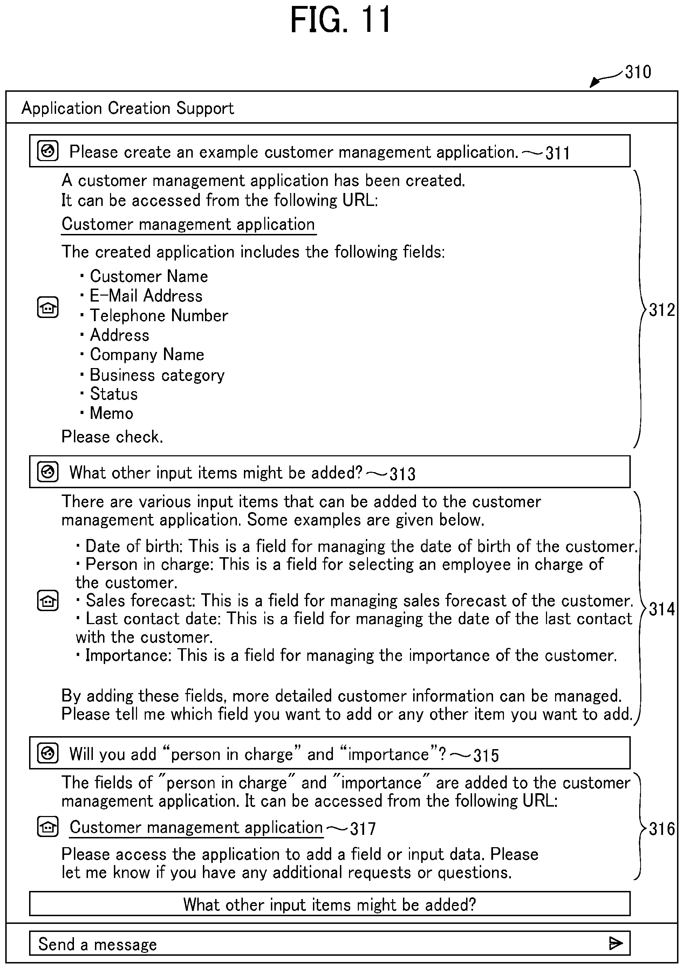

S2: When the communication unit 21 of the information processing system 20 receives the HTTP request from the user terminal 10, the screen generation unit 22 generates the screen information of the application creation page. The communication unit 21 transmits an HTTP response including the screen information of the application creation page to the user terminal 10 as a response to the HTTP request. FIG. 11 illustrates an example of the application creation page.

S3: The user inputs a chat message (for example, please create a XX app) to the user terminal 10. The input may be performed using a keyboard or by voice. The operation receiving unit 13 receives the chat message. The communication unit 11 of the user terminal 10 generates a request message including the chat message and transmits the generated request message to the information processing system 20. The communication unit 11 of the user terminal 10 transmits the generated request message as, for example, an HTTP request. The communication unit 11 of the user terminal 10 may include a history of past conversations in the request message. The history of past conversations may be held by the information processing system 20. When the information processing system 20 holds the history of past conversations, the communication unit 11 of the user terminal 10 may not include the history of past conversations in the request message.

S4: The communication unit 21 of the information processing system 20 receives the chat message and the history of past conversations. The communication unit 21 of the information processing system 20 passes the chat message and the history of past conversations to the chat control unit 23. The chat control unit 23 generates a request message including the system settings (setting information), the chat message, the history of past conversations, and the function specification setting, and transmits the generated request message to the generative AI system 50 by calling the first API 26 (see FIGS. 6A and 6B).

S5: The generative AI system 50 returns a response message to the information processing system 20 (see FIG. 7). The response message includes either a reply message or a function call request. The chat control unit 23 receives the response message from the generative AI system 50. This response message includes either a reply message or a function call request. In the case of a function call request, the process proceeds to step S7. In the case of a reply message, the process proceeds to step S6.

S6: The chat control unit 23 determines whether the response message of the generative AI system to the chat message includes a normal reply message or a function call request (request relating to generating the application). Based on determination result indicating that the response includes a normal reply message, the chat control unit 23 of the information processing system 20 transmits the reply message via the communication unit 21 to the user terminals 10. For example, the reply message is "Please tell me details."

S7: When the chat control unit 23 receives a function call request, the chat control unit 23 analyzes the function and determines that generation or update of the application in the application service 40 is requested (application generation request). Since the function for generating the application is designated in the function specification setting 233 in step S4, the chat control unit 23 can easily determine that the request is the request to generate the application based on the name 238 of the function included in the function call request. The chat control unit 23 obtains the arguments 239 (including the application name 239a, the field names 239b and 239c, and the date format) included in the function call request.

Accordingly, the chat control unit 23 requests the application generation unit 25 to generate or update the application in the application service 40. The application generation unit 25 calls the second API 27 to transmit a request message for creating or updating the application to the application service 40. In other words, by transmitting the request message, the application generation unit 25 implements the functionality of the function requested to be called by the generative AI system 50. In the present embodiment, the application generation unit 25 generates or updates an application. The application generation unit 25 calls the three APIs mentioned above.
(1) API for generating an application published by the application service 40;
(2) API for adding multiple fields such as "date" and "job content" to the application created in by (1); and
(3) API for publishing the application.

In (2), the application generation unit 25 includes, in the request message, the arguments 239 (such as the application name 239a, the field names 239b and 239c, and the date format), which are the parameters included in the response message from the generative AI system 50, and requests the generation of the application. The specific request message may vary depending on the application service 40.

The information processing system 20 updates the existing application at the time of the second function call request. Accordingly, not only generation of an application but also update of the application can be performed.

S8: The application generation unit 25 receives the response message from the application service 40. The result included in the response message is, for example, "The application has been successfully created. The URL is..." If the application fails to be generated, an error message is returned from the application service 40. When the generation is successful, the process proceeds to step S9, and when unsuccessful, the process proceeds to step S13.

S9: When the application is successfully generated, the chat control unit 23 calls the first API 26 to transmit a request message including the URL of the application to the generative AI system 50 (see FIG. 8). This creates continuity in the conversation between the user and the generative AI system 50.

S10: The generative AI system 50 returns a response message including a reply message to the information processing system 20. The chat control unit 23 receives the response message from the generative AI system 50 (see FIG. 9). The response message includes the URL of the application.

S11: When the application is successfully generated, the communication unit 21 of the information processing system 20 transmits the reply message included in the response message of step S10 to the user terminal 10. Then, the process of FIG. 10 ends. To update the application, the user returns to step S3 as desired.

S12: When the generation of the application has failed a predetermined number of times or more, the communication unit 21 of the information processing system 20 transmits a message indicating the failure such as "Failed to create/update the application" to the user terminal 10. Then, the process of FIG. 10 ends. To create an application again, the user returns to step S3 as desired.

S13: When the response message of step S8 indicates that the application generation has failed, the chat control unit 23 calls the first API 26 to transmit an error message from the application service 40 to the generative AI system 50. In addition to the error message, a history of past conversations is transmitted. This allows the generative AI system 50 to create a function call request that does not result in an error. For example, when the request message transmitted from the application generation unit 25 to the application service 40 violates the specifications of the second API 27 published by the application service 40, the error message may include the correct specifications. The generative AI system 50 understands the specifications and generates a function call request that is less likely to result in an error. For example, when the error message indicates the use of a character type unusable in the application service 40, the error message specifies the unusable character type. Then, the generative AI system 50 can create a function call request that does not include the unusable character type. This also applies to the format of the request message not limited to character type.

S14: The chat control unit 23 receives the response message from the generative AI system 50. The response message is another function call request or a reply message. Since the chat control unit 23 has transmitted the error message, it is expected that the response message includes another function call request that results in the success of generating an application. In the case of a function call request, the process proceeds to step S7. In the case of a reply message, the process proceeds to step S6.

### Display Example of Application Creation Page on User Terminal

FIG. 11 is a diagram illustrating a display example of an application creation page 310 (chat screen) displayed by the user terminal 10 when the user develops an application. The chat message input by the user and the reply message from the generative AI system 50 are alternately displayed on the application creation page 310. A chat message 311 is "Please create an example customer management application."

A reply message 312 to the chat message 311 is "A customer management application has been created. It can be accessed from the following URL: Customer management application (an URL is embedded)

The created application includes the following fields: Customer name, mail address, telephone number, address, company name, business category, status, and memo."

A chat message 313 is "What other input items might be added?" A reply message 314 to the chat message 313 is "There are various input items that can be added to the customer management application. Some examples are given below:
Date of birth: This is a field for managing the date of birth of the customer.
Person in charge: This is a field for selecting an employee in charge of the customer.
Sales forecast: This is a field for managing sales forecast of the customer.
Last contact date: This is a field for managing the date of the last contact with the customer.
Importance: This is a field for managing the importance of the customer."
A chat message 315 is "Will you add the person in charge and importance?" A reply message 316 to the chat message 315 is "The fields of "person in charge" and "importance" are added to the customer management application. It can be accessed from the following URL:
   Customer management application (an URL is embedded) Please access the application to add a field or input data. Please let me know if you have any additional requests or questions.

The URL returned from the application service 40 in step S8 of FIG. 10 is embedded in an application name 317 "customer management application" included in the reply message 316. The user can use the created or updated application by pressing the URL.

As can be seen from the chat messages 311, 313, and 315, the user has not entered the field name of the customer management application. Further, the field names proposed by the generative AI system 50 are used in the chat message 315. Thus, the user can develop the customer management application without knowledge of the customer management application and programming.

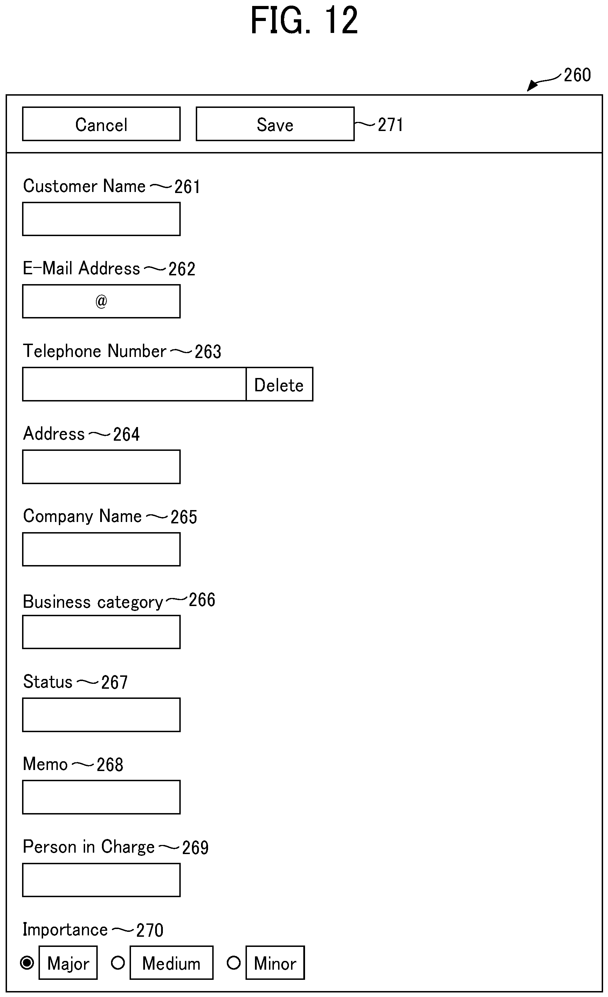

FIG. 12 is a diagram illustrating an example of a customer management application screen 260 displayed by the customer management application created by the conversation in FIG. 11. The customer management application screen 260 includes a customer name field 261, an email address field 262, a telephone number field 263, an address field 264, a company name field 265, a business category field 266, a status field 267, a memo field 268, a person in charge field 269, and an importance field 270. These fields are generated in the conversation between the user and the generative AI system 50. Thus, the user can develop a customer management application by conversation with the generative AI system 50 without listing any field name.

Although the customer management application is generated without listing any field name in the above example, the user may designate one or more field names in the chat message.

When the user presses a save button 271, the user terminal 10 transmits a message indicating that the customer management application is to be saved to the application service 40. After that, the user can use the customer management application from, for example, a portal screen.

Supplement on Authentication for Information Processing System to Use Second API Published by Application Service

The information processing system 20 needs to be authenticated by the application service 40 so as to call the second API 27. When the information processing system 20 operates in the same domain as the application service 40 in the sequence diagram of FIG. 10, the authentication information of the application service 40 is transmitted from the web browser operating on the user terminal 10 to the information processing system 20. The authentication information is included in, for example, a cookie in advance. Accordingly, the information processing system 20 can call the second API 27 published by the application service 40. When the low-code or no-code platform (the application service 40) and the information processing system 20 are developed by the same organization, it would be easy to place the platform (the application service 40) and the information processing system 20 in the same domain. In this case, there is no challenge.

However, when the information processing system 20 and the application service 40 operate in different domains, authentication-related challenges may arise. This is described below with references to FIG. 13. FIG. 13 is a diagram illustrating an example of a portal screen 330 of the application service 40 displayed by the user terminal 10. The user can use an application or develop an application from a portal screen 330.

For example, the configuration of the portal screen 330 of the application service 40 is as follows. The portal screen 330 displays an application creation button 331 labeled "application creation support by AI." When the user presses the application creation button 331 labeled "application creation support by AI", a window of another web page 332 for communicating with the information processing system 20 pops up. In this case, since the application service 40 and the information processing system 20 are in different domains, the user terminal 10 cannot transmit the authentication information of the application service 40 to the information processing system 20.

Accordingly, the information processing system 20 cannot call the second API 27 published by the application service 40. Specifically, because the pop-up web page 332 is in a domain different from that of the portal screen 330, the pop-up web page 332 cannot access the cookie of the application service 40.

A conceivable approach to this inconvenience is that the pop-up web page 332 requests the portal screen 330 to call the second API 27 published by the application service 40.

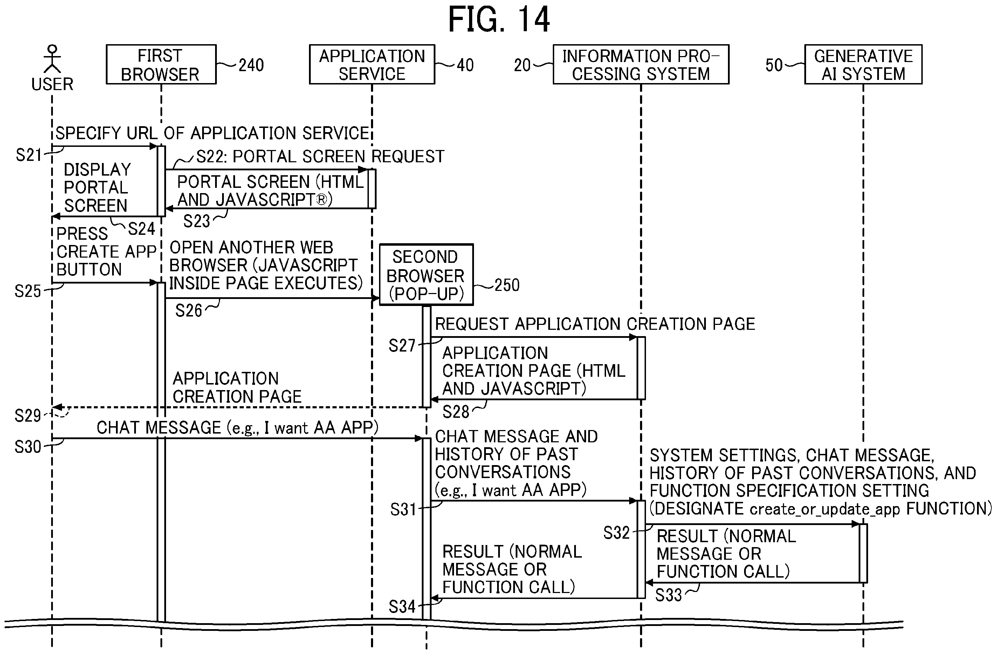

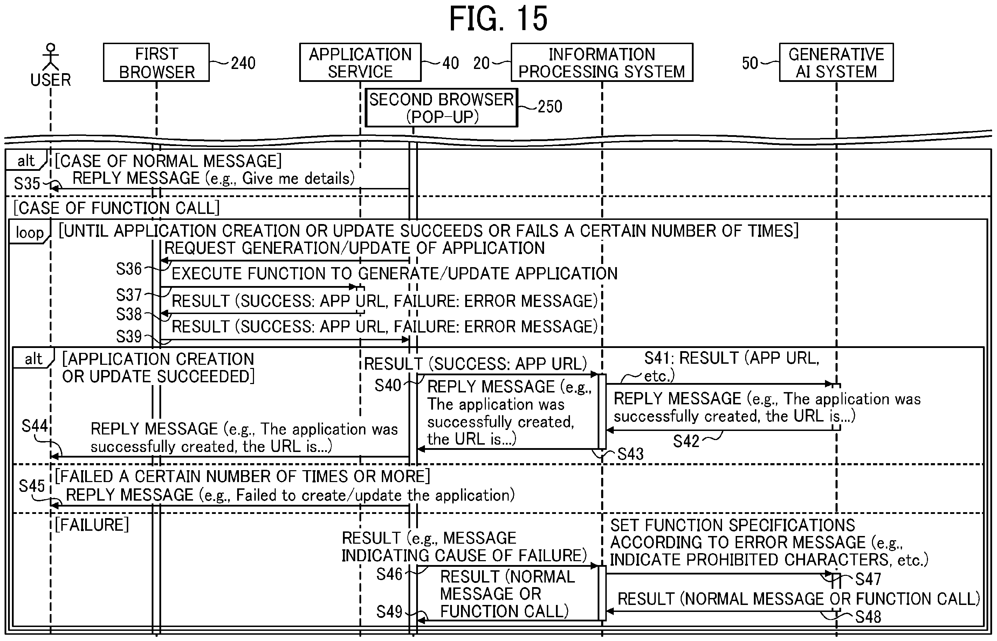

FIGS. 14 and 15 are sequence diagrams of an example of a process in which the information processing system 20 generates or updates an application in the application service 40 by using the cooperation of two web browsers on the user terminal 10. In the description with reference to FIGS. 14 and 15, the differences from FIG. 10 are focused. Steps S36 to S49 are repeatedly executed as a major process.

S21: The user specifies the URL of the application service 40 on the user terminal 10. The web browser connected to the application service 40 is referred to as an original web browser 240 (an example of a first web browser).

S22: the communication unit 11 of the user terminal 10 connects to the URL of the application service 40. Since the user designates the URL of the portal screen 330 on the user terminal 10, the web browser operating on the user terminal 10 transmits an HTTP request including the URL of the portal screen 330 to the application service 40.

S23: When receiving the HTTP request from the user terminal 10, the application service 40 transmits screen information (described in, for example, HTML, JAVASCRIPT, and CSS) of the portal screen 330 to the user terminal 10. The screen information includes a script for activating a second web browser 250 (another web browser) and the URL of the web page 332 (application creation page).

S24: The communication unit 11 of the user terminal 10 receives the screen information of the portal screen 330, and the display control unit 12 of the first web browser 240 displays the portal screen 330.

S25: The user presses the application creation button 331 labeled "application creation support by AI" on the portal screen 330.

S26: The inter-browser cooperation unit 14 activates the second web browser 250. The second web browser 250 pops up. More specifically, the other web browser 250 is launched by executing JAVASCRIPT included in the screen information of the portal screen 330.

S27: The second web browser 250 requests the screen information of the web page 332 (application creation page) from the information processing system 20 by designating the URL of the web page 332 (application creation page) received from the first web browser 240.

S28: The screen generation unit 22 of the information processing system 20 generates screen information (described in, for example, HTML, JAVASCRIPT, and CSS) of the application creation page. The communication unit 21 transmits the screen information of the application creation page to the second web browser 250 (the user terminal 10).

S29: The communication unit 11 of the user terminal 10 receives the screen information of the application creation page. The display control unit 12 displays the application creation page based on the screen information.

S30: The user inputs a chat message such as "I want XX application" to the user terminal 10.

The process after the user terminal 10 displays the application creation page is like that in FIG. 10. In the description of FIGS. 14 and 15, differences from FIG. 10 are focused. Steps S31 to S34 are like steps S3 to S6 in FIG. 10.

S35: In response to receiving a reply message as the response message from the generative AI system 50 in step S34, the display control unit 12 of the second web browser 250 displays the reply message (for example, Give me details).

S36: When the second web browser 250 receives a function call request as the response message from the generative AI system 50 in step S34, the inter-browser cooperation unit 14 of the second web browser 250 transmits to the first web browser 240 a request of generating or updating the application in the application service 40. As a method for such cooperation (message communication) between browsers, window.postMessageU described on https://developer.mozilla.org/en-US/docs/Web/API/Window/postMessage is known.

S37: The first web browser 240 executes the function to generate or update an application in the application service 40.

S38: The application service 40 transmits a result (indicating success or failure) of the generation or update of the application to the first web browser 240. The URL of the application is returned when the generation or update of the application is successful, and an error message is returned when not successful.

S39: The inter-browser cooperation unit 14 of the first web browser 240 transmits a result of the generation or update of the application to the second web browser 250. When the generation or update is successful, the process proceeds to step S40, and when unsuccessful, the process proceeds to step S46.

S40: The inter-browser cooperation unit 14 of the second web browser 250 receives the result indicating the success (URL of the application), and the communication unit 11 of the second web browser 250 transmits the result (success) of the generation or update of the application to the information processing system 20. Accordingly, in the process of FIG. 15, the information processing system 20 receives the result from the user terminal 10 (the second web browser 250) instead of the application service 40. The process from S41 to S43 is like that from S9 to S11 in FIG. 10.

S44: The communication unit 11 of the second web browser 250 receives the reply message. The display control unit 12 displays the reply message on the application creation page. The process of FIG. 15 ends in step S44. To update the application, the user returns to step S30 as desired.

S45: When the second web browser 250 receives the result (indicating success or failure) of the step S39, the inter-browser cooperation unit 14 determines whether the results indicating the failure are consecutively received a certain number of times or more. When the results indicating the failure are consecutively received a certain number of times or more, the display control unit 12 controls the second web browser 250 to display a message indicating the result such as "Failed to create/update the application." Then, the process of FIG. 15 ends. To create an application again, the user returns to step S30 as desired.

S46: When the inter-browser cooperation unit 14 of the second web browser 250 receives the result indicating the failure (error message), the communication unit 11 of the second web browser 250 transmits the result (failure) of the generation or update of the application to the information processing system 20. The process from S47 to S48 is like that from S13 to S14 in FIG. 10.

S49: The information processing system 20 transmits a function call request or a normal reply message to the second web browser 250. In the case of a function call request, the process proceeds to step S36. In the case of a reply message, the process proceeds to step S35.

After that, in a repetitive process, the information processing system 20 similarly generates or updates the application in the application service 40 by requesting the user terminal 10 to generate or update the application.

Although an example in which the second web browser 250 pops up has been described with reference to FIGS. 14 and 15, a capability called "inline frame (iframe)" supported by a web browser may be used. The iframe (inline frame) is defined by an element (tag) of HTML and loads another web page or contents (e.g., text, an image, or a moving image) within a web page. When another web page is embedded in the web page, the application creation page that is another site can be displayed in the portal screen of the application service 40. For the communication between windows in this case, postMessage is known. The sequence in this case may be like that illustrated in FIG. 10.

The information processing system 20 according to the present embodiment can overcome the above-described two barriers (not sure about what kind of application to create and how to create an application in mind) for users with limited expertise to develop applications.

The application generation system 100 according to the present embodiment can develop an application from a natural language conversation between the user and the generative AI system 50. Since the information processing system 20 designates a function to the generative AI system 50, the generative AI system 50 can request the information processing system 20 to call the function together with the field name of the application.

Then, the information processing system 20 generates or updates the application. Accordingly, the present embodiment can provide a no-code or low-code platform for a use to develop a daily report app by inputting a message "Create an example daily report app."

### Applied Cases

Although the example embodiments of the present invention are described above, the above-described embodiments are not intended to limit the scope of the present invention. Thus, numerous modifications and replacements of elements are possible within the scope of the present invention.

For example, although the user inputs chat messages in a natural language in the present embodiment, alternatively, the user may transmit, for example, an image (e.g., a photograph, handwriting, or a snapshot) representing a screen of an application to the information processing system 20 and request generation of the application. The information processing system 20 transmits the screen of the application to the generative AI system 50, and the generative AI system 50 analyzes the screen of the application and transmits a function call request to the information processing system 20.

The generative AI system 50 can include the field name and the data format extracted from the screen of the application in the function call request.

For example, although the user inputs chat messages in a natural language in the present embodiment, the user may input voice. When the user inputs voice (speech) to the user terminal 10, the user terminal 10 transmits the voice to the information processing system 20. Then, the information processing system 20 converts the received voice into text and generates a request message including the converted text. The generated request message is transmitted to the generative AI system 50.

Further, when the generative AI system 50 supports voice input, the information processing system 20 may transmit the received voice to the generative AI system 50.

Although the user explicitly requests the information processing system 20 to generate an application such as "I want XX app in the present embodiment, the user does not necessarily have to explicitly specify. For example, when the user transmits a chat message "data input is troublesome" to the information processing system 20, the information processing system 20 or the generative AI system 50 detects the inconvenience. When determining that the inconvenience can be solved by the generation of an application, the information processing system 20 or the generative AI system 50 proposes the generation of a new application to the user.

In the present embodiment, the information processing system 20 transmits the URL of the application to the generative AI system 50, but any access information for accessing the application may be used. For example, when the application service 40 returns the identifier (ID) of the generated application to the information processing system 20, the information processing system 20 transmits the ID of the application to the generative AI system 50. The information processing system 20 transmits the ID of the application included in the response message from the generative AI system 50 to the user terminal 10. When the user terminal 10 requests the execution of an application by designating the ID of the application, the information processing system 20 converts the ID into the URL of the application and returns the URL to the user terminal 10.

Although the information processing system 20 receives a function call request from the generative AI system 50 in the present embodiment, alternatively, the information processing system 20 may receive a request of calling the Web-API from the generative AI system 50. In other words, the function and the API may not be strictly distinguished from each other.

The apparatuses or devices described in one embodiment are just one example of multiple computing environments that implement the one embodiment in this specification. In some embodiments, the information processing system 20 includes multiple computing devices, such as a server cluster. The multiple computing devices communicate with one another through any type of communication link including, for example, a network and a shared memory, and perform the processes disclosed in the present disclosure.

Further, the information processing system 20 can be configured to share the steps in the process (e.g., steps in FIG. 10) in the above-described embodiments in various combinations. For example, a process performed by a certain unit may be performed by multiple information processing apparatuses included in the information processing system 20. Further, the elements of the information processing system 20 may be implemented by one server apparatus or are allocated to multiple apparatuses.

The functional configurations illustrated in, for example, FIG. 5 are illustrated in blocks divided according to the functions in order to facilitate understanding of the processing performed by the information processing system 20. No limitation is intended by how the processing units are divided by the unit of process or by the name. The processing units implemented by the information processing system 20 can be divided to a larger number of processing units depending on the contents of processing. Further, a single processing unit can be divided into multiple processing units.

Each of the functions of the described embodiments may be implemented by one or more processing circuits or circuitry. The "processing circuit or circuitry" in the present specification includes a programmed processor to execute each function by software, such as a processor implemented by an electronic circuit, and devices, such as an application-specific integrated circuit (ASIC), a digital signal processor (DSP), a field programmable gate array (FPGA), and conventional circuit modules arranged to perform the recited functions.

A configuration example in which the application service 40 and the information processing system 20 are integrated will be described. Although the information processing system 20 includes the functions of the application service 40 in the following description, alternatively, the application service 40 may include the functions of the information processing system 20.

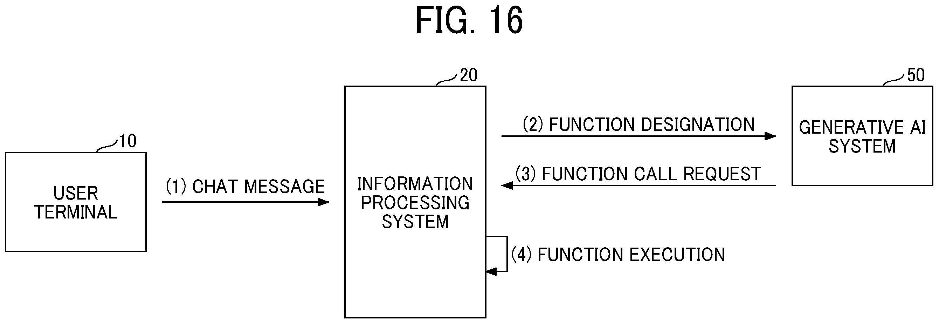

FIG. 16 is a diagram illustrating a process from when a generative AI system 50 requests an information processing system 20 to execute a function in response to a chat message input by a user to when the information processing system 20 generates an application. The steps (1) to (3) may be like those described with reference to FIG. 1.

(4) The information processing system 20 generates an application in response to the function call request included in the response message transmitted from the generative AI system 50. What kind of application is generated is determined by steps (2) and (3). More specifically, the information processing system 20 executes a function for generating an application from the content of the function call request (function call). In the configuration illustrated in FIG. 16, the information processing system 20 itself generates or updates an application.

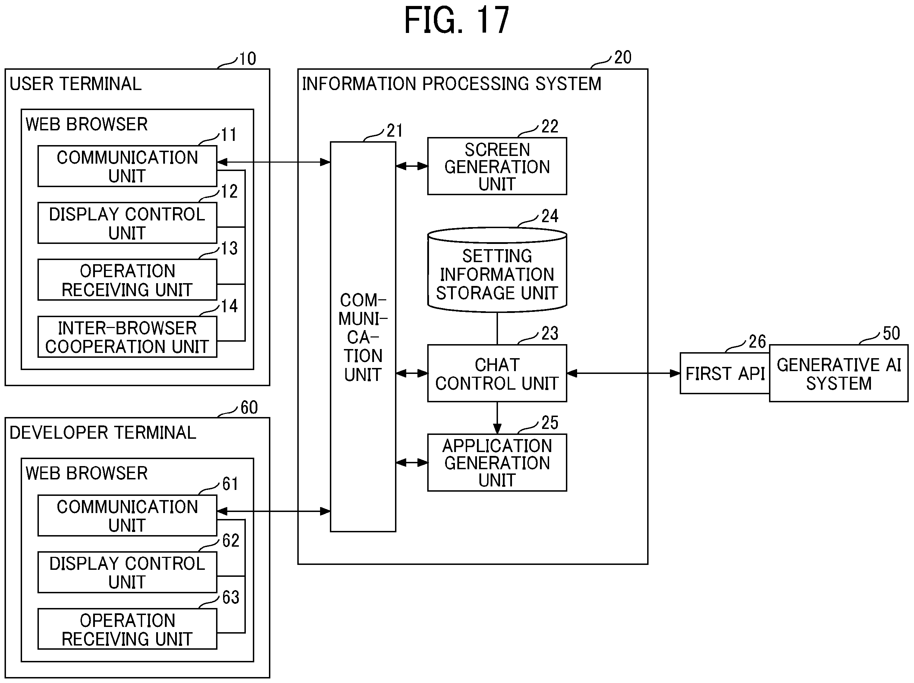

FIG. 17 is a block diagram illustrating an example of functional configurations of the information processing system 20, the user terminal 10, and the developer terminal 60 when the application service 40 and the information processing system 20 are integrated. In the description referring to FIG. 17, differences from FIG. 5 are focused. Since the information processing system 20 and the application service 40 are integrated, the application generation unit 25 does not call the second API 27. The functions of the communication unit 21, the screen generation unit 22, the setting information storage unit 24, and the chat control unit 23 can be like those in FIG. 5.

The application generation unit 25 in FIG. 17 is implemented as a predefined function is executed. Parameters to be input to the function to be executed include a field name of the database and a data format.

### Second Embodiment

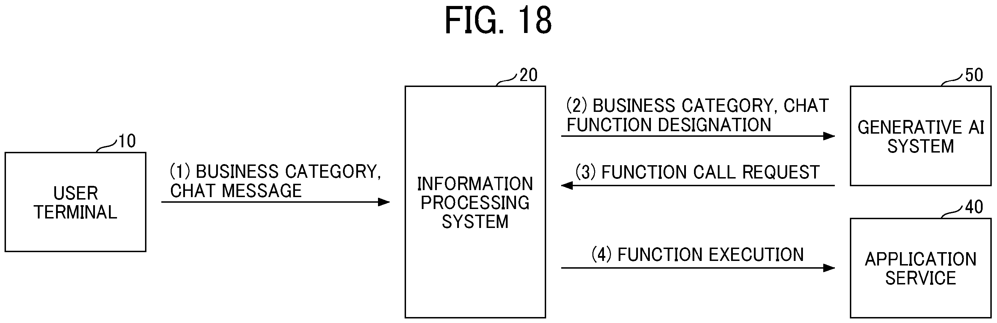

FIG. 18 is a diagram illustrating a process from when the generative AI system 50 requests the information processing system 20 to execute a function in response to a chat message input by a user to when the information processing system 20 generates an application, according to a second embodiment. The process of FIG. 18 is like the process in FIG. 1 except that the user inputs information on the application to be developed, such as business category.
(1) The user inputs information such as business category relating to the application to be developed. The user terminal 10 transmits the information such as business category relating to the application to be developed and a chat message input by the user to the information processing system 20. In the present embodiment, the chat message is, for example, "Create a daily report application." The chat message is not limited to direct instructions such as "Create a daily report application" but includes messages indicating desires such as "I want a daily report application."
(2) When the information processing system 20 receives the chat message input by the user, the information processing system 20 includes the received chat message in a request message and transmits the request message to the generative AI system 50 via an API for receiving a request message provided by the generative AI system. The information processing system 20 includes the precondition information such as business category, the chat message, and the designation of function specifications in the request message transmitted.
(3) The generative AI system 50 transmits a response message including a function call request (function call) to the information processing system 20 based on the business category, the history of conversation (chat messages), the function specification setting, and the system settings included in the transmitted request message.
(4) The information processing system 20 generates an application in response to the function call request included in the response message transmitted from the generative AI system 50. More specifically, the information processing system 20 generates a request message for calling the API of the application service 40 from the content of the function call request, and transmits the generated request message to the application service 40. In the present embodiment, the expression "execution of a function" or "executing a function" may also refer to such a process related to the generation of a request message. In the present embodiment, the information processing system 20 generates or updates the application in the application service 40 in response to the function call request.

The application creation support screen may be like that illustrated in FIG. 2A. The business category related to the application to be developed is not essential, but business category specified by the user allows the generative AI system 50 to easily generate items of an application appropriate for the user.

In the present embodiment, the information processing system 20 can communicate with the application service 40 or the information processing system 20 and the application service 40 are in the same domain.

The system configuration of the application generation system 100 according to the present embodiment may be like the configuration illustrated in FIG. 3.

The hardware configurations of the information processing system 20, the user terminal 10, and the developer terminal 60 included in the application generation system 100 may be like those in FIG. 4.

### Functions

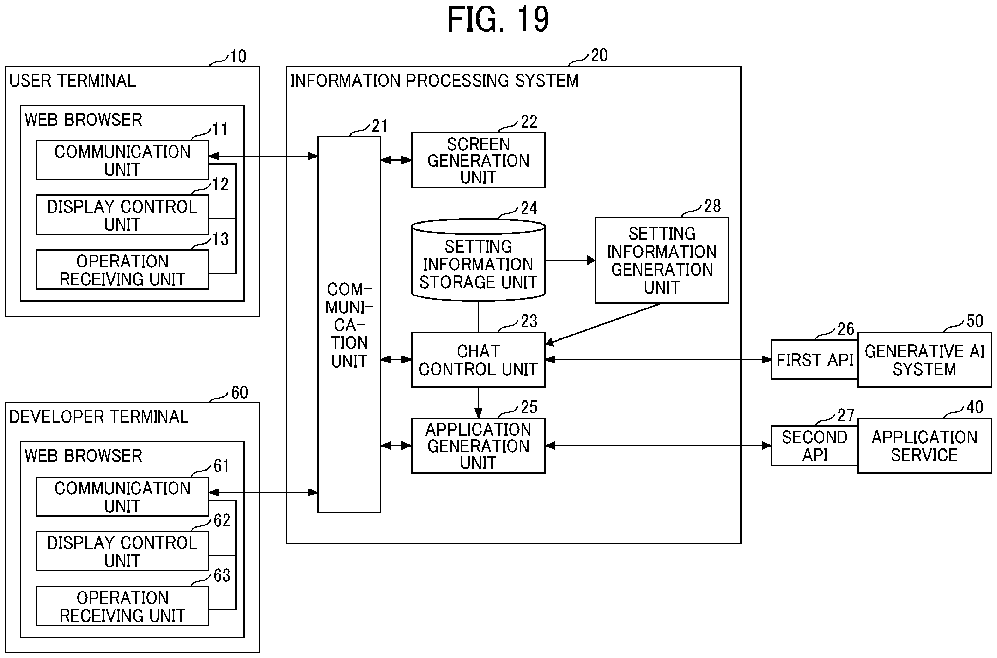

A description is now given of a functional configuration of the application generation system 100 according to the second embodiment, with reference to FIG. 19. FIG. 19 is a block diagram illustrating an example of functional configurations of the information processing system 20, the user terminal 10, and the developer terminal 60.

### User Terminal

The user terminal 10 includes a communication unit 11, a display control unit 12, and an operation receiving unit 13. These functional units provide functions or means implemented by the CPU 501 (see FIG. 4) executing instructions included in one or more programs installed on the user terminal 10. For example, the communication unit 11, the display control unit 12, the operation receiving unit 13, and the inter-browser cooperation unit 14 may be implemented by at least one of web browser and JAVASCRIPT. When the developer terminal 60 executes a native application, these functional units may be implemented by the native application.

The communication unit 11 transmits and receives various types of information to and from the information processing system 20. In the present embodiment, the communication unit 11 receives screen information of the portal screen from the application service 40, and receives screen information of, for example, the chat screen (application creation page) on which a chat message is input from the information processing system 20. The communication unit 11 transmits, for example, a chat message and operation information on the user terminal 10 to the information processing system 20. The communication unit 11 may directly communicate with the generative AI system 50.

The display control unit 12 interprets the screen information of various screens to display the contents on the display 506. The operation receiving unit 13 receives various operations made by the user on various screens displayed on the display 506.

The developer terminal may have a configuration like that illustrated in FIG. 5.

### Information Processing System

The information processing system 20 includes the communication unit 21, the screen generation unit 22, the chat control unit 23, the setting information storage unit 24, the application generation unit 25, and a setting information generation unit 28. The functional units of the information processing system 20 each provides a means or function indicated by their names, implemented by the CPU 501 illustrated in FIG. 4 executing instructions included in one or more programs installed on the information processing system 20. The setting information storage unit 24 is built, for example, in the RAM 503 or HD 504 illustrated in FIG. 4. The setting information storage unit 24 may not be included in the information processing system 20 but may reside on a network accessed by the information processing system 20.

The communication unit 21 transmits and receives various kinds of information to and from the user terminal 10. The communication unit 21 transmits screen information of the chat screen (for application creation support) to the user terminal 10. The communication unit 21 receives a chat message input by the user for developing an application from the user terminal 10. The communication unit 21 transmits and receives various kinds of information to and from the developer terminal 60. The communication unit 21 transmits the screen information of an input screen of setting information to the developer terminal 60. The communication unit 21 receives the setting information input by the developer from the developer terminal 60 and stores the setting information in the setting information storage unit 24.

The screen generation unit 22 generates the screen information of the screens (web pages) displayed by the user terminal 10 and the developer terminal 60. The web page is provided as a part of a web application. The screen information is a program described in HyperText Markup Language (HTML), JavaScript Object Notation (JSON), Extensible Markup Language (XML), a scripting language, Cascading Style Sheet (CSS), or other markup and programming languages. The structure of a web page is mainly specified by HTML, the operation of the web page is defined by a scripting language, and the style of the web page is specified by CSS. The user terminal 10 may execute a native application. The native application is an application that is not executed unless the application is installed on the user terminal 10. In the case of a native application, the screen information is held by the user terminal 10, and the information to be displayed is transmitted in, for example, JSON or XML.

The chat control unit 23 calls a first API 26 to transmit a request message to the generative AI system 50. The request message includes a chat message (including a history of past conversations), the system settings, and the function specification setting. The setting information generation unit 28 generates system settings to be analyzed by the generative AI system 50 based on the setting information stored in the setting information storage unit 24. The setting information generation unit 28 includes the business category input by the user in the system settings.

The first API 26 is one or more APIs published by the generative AI system 50. The chat control unit 23 receives from the generative AI system 50 a response message to the request message as a result of calling the first API 26. The response message includes a reply message responding to the chat message, a function call request to the information processing system 20, or the URL of a created or developed application.

The application generation unit 25 is implemented by the executing of a predefined function. The function of the application generation unit 25 is like the function described with reference to FIG. 5.

The capability called "function call" provided by the generative AI system 50 is like that described in the previous embodiment.

### Support of Application Development by Application Service

In the present embodiment, a description is given below of a request message transmitted by the information processing system 20 and a response message transmitted by the generative AI system 50 when, for example, a user develops a daily report application.

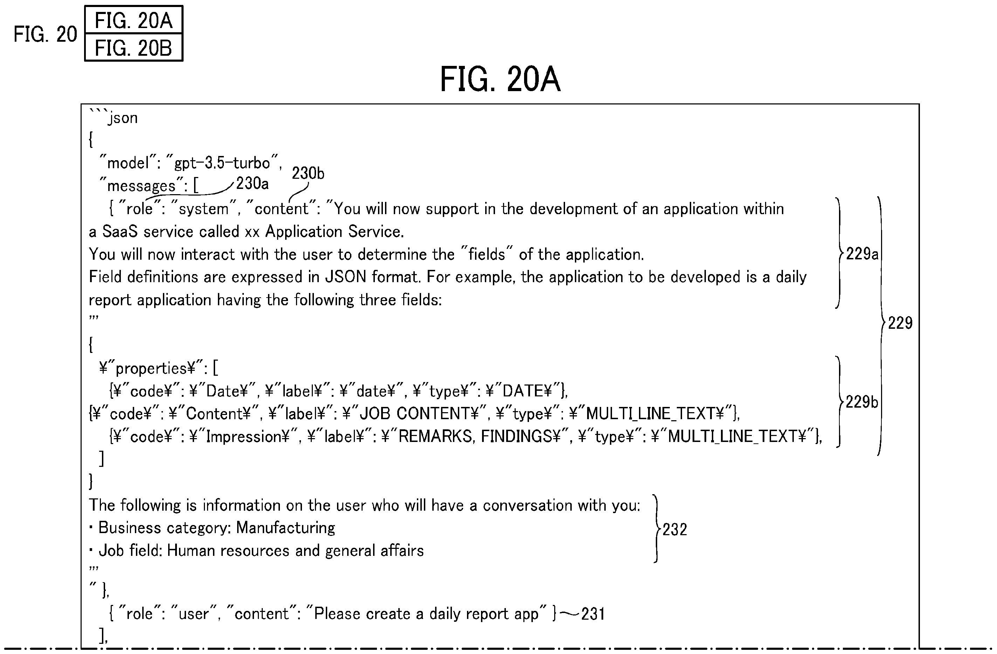

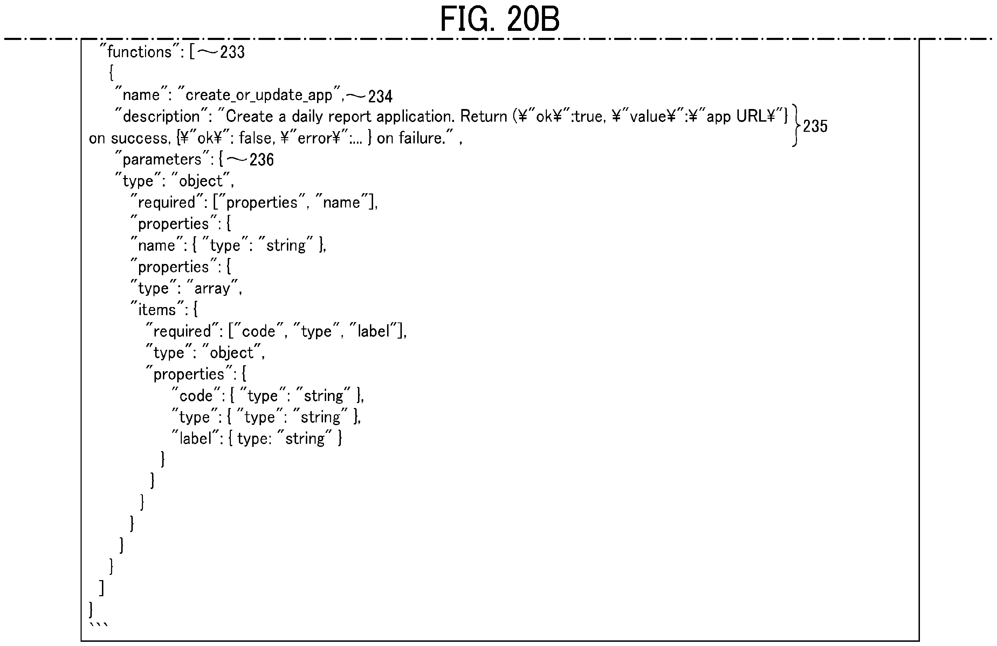

FIGS. 20A and 20B (FIG. 20) illustrate an example of the request message with which the information processing system 20 calls the first API 26 published by the generative AI system 50 when the user inputs "Please create a daily report application" on the screen of the user terminal 10. The request message includes a role 230a and a content 230b. The role 230a indicates a speaker which is either user, assistant (AI of the generative AI system 50), or system (instructing setting of AI assistant). The content 230b is the content of a conversation and may be written in a natural language.

The request message in FIGS. 20A and 20B includes the system settings 229 by the system. The system settings 229 include information 229a such as: "You will now support in the development of an application within a SaaS service called xx Application Service. You will now interact with the user to determine the "fields" of the application. Field definitions are expressed in JSON format. For example, the application to be developed is a daily report application having the following three fields." The system settings 229 includes information 229b indicating field names such as "date," "job content," and "remarks/findings." The data format of each field is also indicated as DATE, MULTI_LINE_TEXT, and MULTI_LINE_TEXT. The information 229a and 229b are based on the setting information transmitted to the information processing system 20 in advance by the developer.

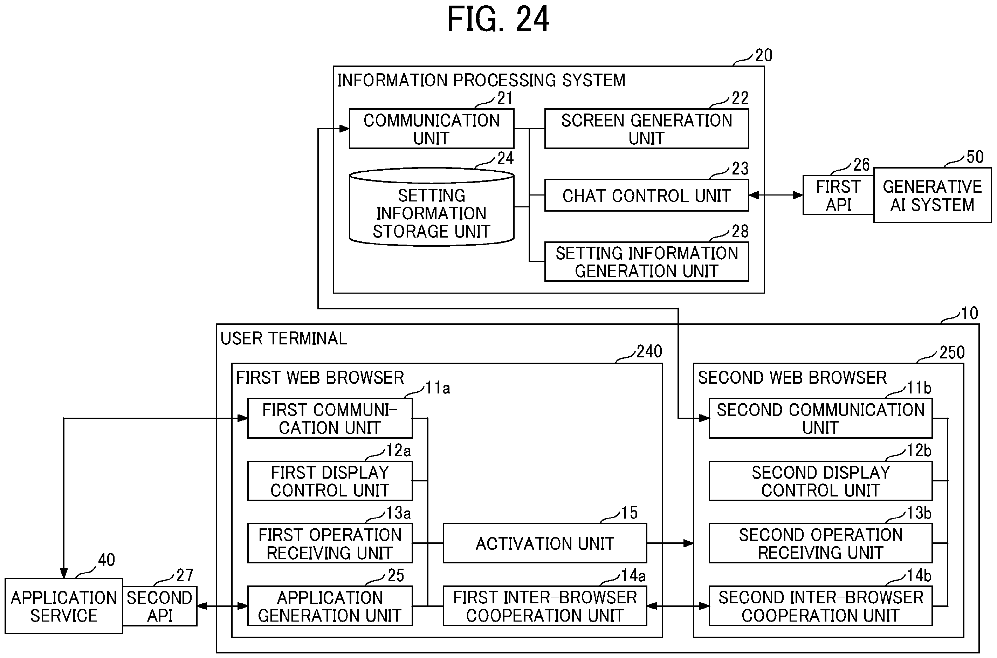

The request message includes business category/job field information 232. These are information input by the user on a chat screen 630 illustrated in FIG. 24. The business category/job field information 232 is one of the system settings set by the setting information generation unit 28 based on the information input by the user (e.g., business category). The business category/job field information 232 is regarded as precondition information for generating an application using the generative AI system 50. This information allows the generative AI system 50 to generate appropriate application items for this user.

The request message may include a chat message 231 "Please create a daily report app" input by the user.

The request message in FIGS. 20A and 20B includes a function specification setting 233. The function specification setting 233 is indicated as "functions" and has the following attributes.

A name 234 indicates the name of the function (create_or_update_app).

The description 235 indicates the specifications of the function. The details of the specifications are "Create a daily report application. Return (¥ok¥":true, ¥"value¥":¥"app URL"} on success, {"ok": false, "error":... } on failure." In other words, the description 235 instructs the generative AI system 50 to return a URL or an error message.

The parameters 236 are parts of the function specifications.

"Type": "object" indicates the data format of the return value.

"Required": ["properties," "name"] indicates an item name (field name) for the return value.

"Name": {"type": "string"} indicates the data format of "name."

"Type": "array" indicates that the data is in a table format.

"Items" and the subsequent parameters each indicate an attribute and a data format for the field.

With the function specification setting 233, the information processing system 20 notifies the generative AI system 50 that the generative AI system 50 can request the information processing system 20 to call the function defined as illustrated in FIGS. 20A and 20B.

An example of the response message of the generative AI system 50 is like that illustrated in FIG. 7.

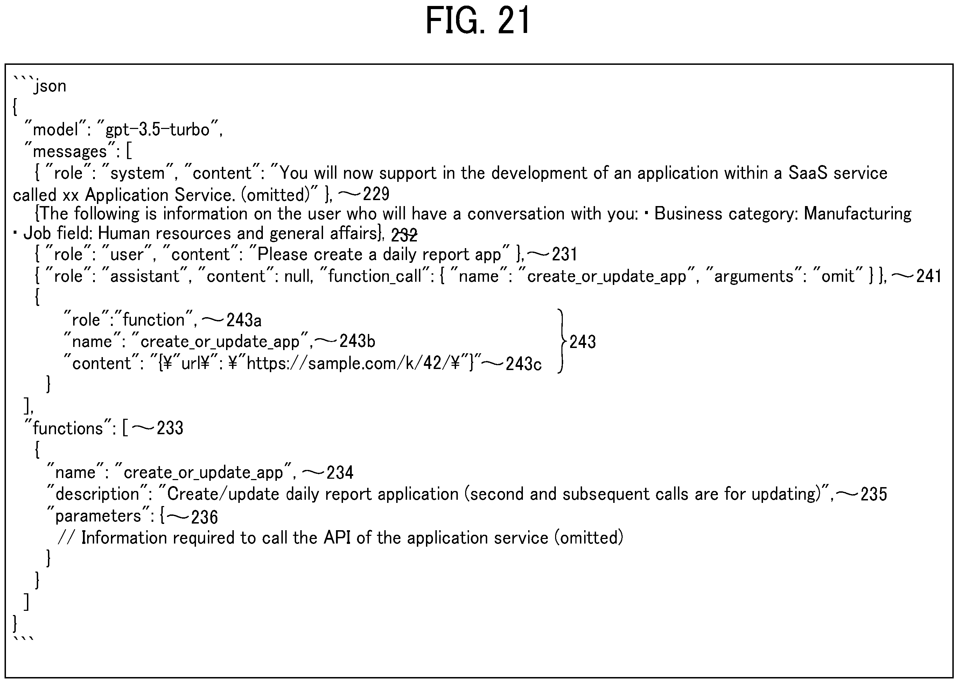

FIG. 21 illustrates an example of a request message transmitted from the information processing system 20 to the generative AI system 50 after the information processing system 20 generates or updates an application in the application service 40. The request message includes the system settings 229, the business category/job field information 232, the chat message 231, and the function call request 241 as the history of past conversations. The information processing system 20 adds the function execution result 243 to the history of past conversations. The function execution result 243 in FIG. 21 includes the text 243a indicating that the function has been executed, and the name 243b (create_or_update_app) indicating the name of the function executed, and the URL 243c. The function specification setting 233 included again in the request message illustrated in FIG. 21 is also a part of the history of past conversations. Although the function specification setting 233 is included as a history of past conversations in FIG. 21, the function specification setting 233 may not be included depending on the specifications of the API provided by the generative AI system 50.

In FIG. 21, the history of past conversations (the system settings 229, the business category/job field information 232, the chat message 231, the function call request 241, the text 243a indicating that the function has been executed, and the name 243b indicating the function name) is included in addition to the URL 243c. Alternatively, when the generative AI system 50 has the function of holding the history of past conversations, the information processing system 20 may transmit only the URL 243c to the generative AI system 50. In other words, in some cases, it is sufficient that the history of past conversations is transmitted from the information processing system 20 to the generative AI system 50 at least once.

An example of the response message from the generative AI system 50 to the request message of FIG. 21 can be like that illustrated in FIG. 9.

### Operation or Processing

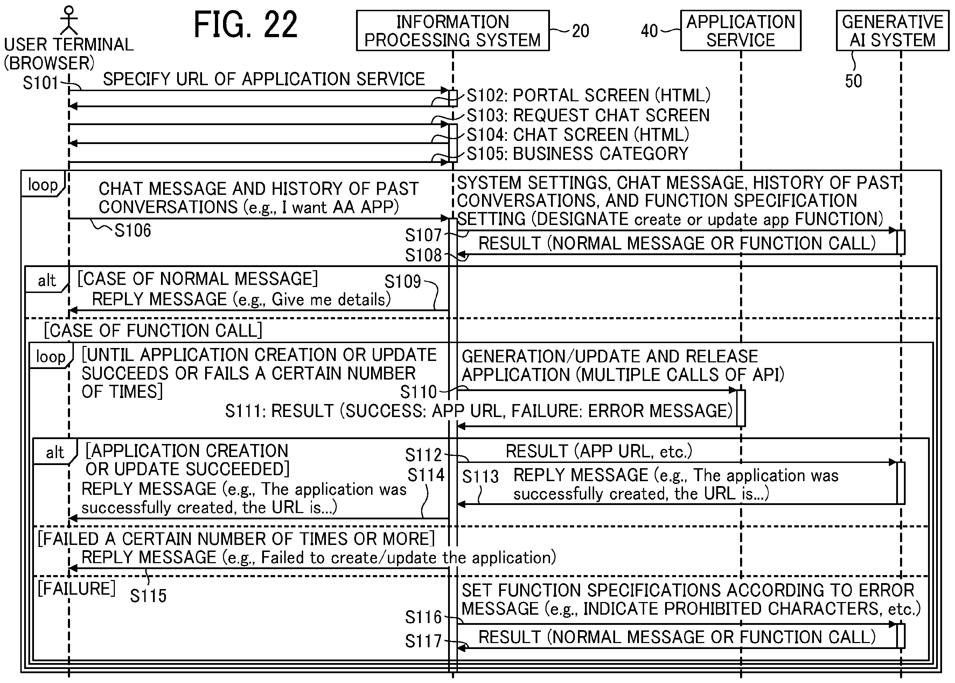

FIG. 22 is a sequence diagram illustrating an example of a process in which the information processing system 20 supports application development. Steps S106 to S117 are repeatedly executed as a major process, and steps S 1 12 to S 117 are repeatedly executed in the major process.

S101: The communication unit 11 of the user terminal 10 connects to the URL of the information processing system 20. The user may designate the URL by directly inputting the URL in the user terminal 10 or by executing a shortcut in which the URL is designated. The communication unit 11 of the user terminal 10 generates an HTTP request including the URL of the portal screen 330, and transmits the generated HTTP request to the information processing system 20.

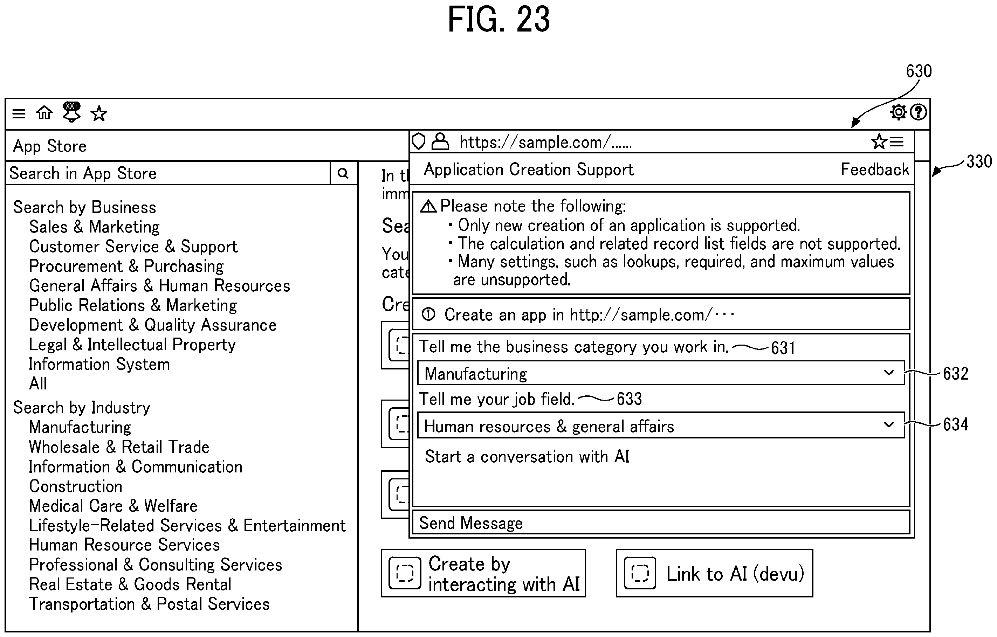

S102: When the communication unit 21 of the information processing system 20 receives the HTTP request from the user terminal 10, the screen generation unit 22 generates the screen information of the portal screen 330. The communication unit 21 transmits an HTTP response including the screen information of the portal screen 330 to the user terminal 10 as a response to the HTTP request. FIG. 23 illustrates an example of the portal screen 330.

S103: The user inputs, to the user terminal 10, an operation to display the chat screen 630 on the portal screen 330. The user presses a button on the portal screen 330, for example. The communication unit 11 of the user terminal 10 generates an HTTP request including the URL of the chat screen 630 and transmits the generated HTTP request to the information processing system 20.

S104: When the communication unit 21 of the information processing system 20 receives the HTTP request from the user terminal 10, the screen generation unit 22 generates the screen information of the chat screen 630. The communication unit 21 transmits an HTTP response including the screen information of the chat screen 630 to the user terminal 10 as a response to the HTTP request. The communication unit 11 of the user terminal 10 receives the HTTP response, and the display control unit 12 displays the chat screen 630. FIG. 23 illustrates an example of the chat screen 630.

S105: The user inputs the business category and the job field to the user terminal 10 in response to messages 631 and 633 (see FIG. 23) urging to input. The input may be performed using a keyboard or by voice. The operation receiving unit 13 receives the business category and the job field. The user performs the operation of transmitting the business category and the job field. The communication unit 11 of the user terminal 10 generates a request message including the business category and the job field and transmits the generated request message to the information processing system 20. The communication unit 11 of the user terminal 10 transmits the generated request message as, for example, an HTTP request.

S106 to S 117 may be like S3 to S14 illustrated in FIG. 10. However, the S107 is different from the S4 in FIG. 10 in that the setting information generation unit 28 generates the system settings in accordance with the business category/job field information 232. The business category/job field information 232 included in the request message allows the generative AI system 50 to easily generates appropriate application items for the user.

### Example Screen of User Terminal

FIG. 23 is a diagram illustrating examples of the portal screen 330 of the application service 40 and the chat screen 630 displayed on the user terminal 10. The user can use an application or develop an application from the portal screen 330. The chat screen 630 overlaps the portal screen 330. The chat screen 630 is a screen for the user to chat with the generative AI system 50. In the present embodiment, when the user develops an application, the generative AI system 50 asks the user about the user's business category. Accordingly, the chat screen 630 includes the message 631 "Tell me the business category you work in" and a pull-down menu 632. Seeing the message 631 which is an instruction urging to input the business category, the user selects, for example, manufacturing from the pull-down menu 632.

The chat screen 630 displays a message 633 "Tell me your job field" and a pull-down menu 634. Seeing the message 633, the user selects, for example, human resources & general affairs from the pull-down menu 634. The user's input of the business category or the job field in this manner allows the generative AI system 50 to easily generate an application with appropriate items.

In FIG. 23, the business category and the job field in which the application is used are input. Alternatively, the content of the work for which the application is used may be specified. The job content of the user who operates the user terminal 10 may be specified. The job content is, for example, nursing or programing. Further, the name of the application to be generated may be specified.

The example of the application creation page (chat screen) 310 displayed on the user terminal 10 when the user develops an application is described above with reference to FIG. 11. The application creation page 310 illustrated in FIG. 11 is displayed subsequent to the chat screen 630 illustrated in FIG. 23.

The chat messages 311, 313, and 315 input by the user and the reply messages 312, 314, and 316 from the generative AI system 50 are alternately displayed on the application creation page 310.

The URL returned from the application service 40 in step S11 of FIG. 22 is embedded in the application name 317 "customer management application" included in the reply message 316. The user can use the created or updated application by pressing the URL.

As can be seen from the chat messages 311, 313, and 315, the user has not entered the field name of the customer management application. Further, the field names proposed by the generative AI system 50 are used in the chat message 315. Thus, the user can develop the customer management application without knowledge of the customer management application and programming.

An example of the customer management application screen 260 displayed by the customer management application created by the conversation in FIG. 23 can be like that illustrated in FIG. 12.

The information processing system 20 according to the present embodiment can overcome the above-described two barriers (not sure about what kind of application to create and how to create an application in mind) for users with limited expertise to develop applications. Further, since the generative AI system 50 considers the business category or the job field input by the user, the generative AI system 50 can easily generate an application item appropriate for the user.

The application generation system 100 according to the present embodiment can develop an application from a natural language conversation between the user and the generative AI system 50. Since the information processing system 20 designates a function to the generative AI system 50, the generative AI system 50 can request the information processing system 20 to call the function together with the field name of the application. Then, the information processing system 20 generates or updates the application. Accordingly, the present embodiment can provide a no-code or low-code platform for a use to develop a daily report app by inputting a message "Create an example daily report app."

### Third Embodiment

In the present embodiment, a configuration for avoiding an inconvenience related to authentication when the information processing system uses the second API published by the application service will be described.

As described above, the information processing system 20 needs to be authenticated by the application service 40 so that the information processing system 20 calls the second API 27. When the information processing system 20 operates in the same domain as the application service 40 in the sequence diagram of FIG. 22, the authentication information of the application service 40 is transmitted from the web browser operating on the user terminal 10 to the information processing system 20. The authentication information is included in, for example, a cookie in advance. Accordingly, the information processing system 20 can call the second API 27 published by the application service 40. When the low-code or no-code platform (the application service 40) and the information processing system 20 are developed by the same organization, it would be easy to place the platform (the application service 40) and the information processing system 20 in the same domain. In this case, there is no challenge.

However, when the information processing system 20 and the application service 40 operate in different domains, authentication-related challenges may arise as described above with reference to FIG. 13.

A conceivable approach to this inconvenience is that the pop-up web page 332 requests the portal screen 330 to call the second API 27 published by the application service 40.

### Functions

FIG. 24 is a block diagram illustrating an example of the functional configurations of the information processing system 20 and the user terminal 10 according to the present embodiment. The function of the developer terminal 60 may be like that of the first embodiment. In the description with reference to FIG. 24, the differences from FIG. 19 are focused.

### User Terminal

In the user terminal 10, the first web browser 240 and the second web browser 250 are executed. The first web browser 240 and the second web browser 250 may be separate applications, or may be separate tabs (separate web pages) displayed by a tab browser.

The first web browser 240 includes a first communication unit 11a, a first display control unit 12a, a first operation receiving unit 13a, an application generation unit 25, an activation unit 15, and a first inter-browser cooperation unit 14a. These functional units provide functions or means implemented by the CPU 501 illustrated in FIG. 4 executing a script included in a web page that the user terminal 10 obtains from the application service 40. The application generation unit 25 may be like that in FIG. 19.

The first communication unit 11a transmits and receives various kinds of information to and from the application service 40. In the present embodiment, the first communication unit 11a receives screen information of, for example, a portal screen from the application service 40.

The first display control unit 12a interprets the screen information such as a web page displayed by the first web browser 240 and displays the web page on the display 506. The first operation receiving unit 13a receives various operations made by the user on the web page displayed on the display 506.

The activation unit 15 activates the second web browser 250 in response to a user operation on the web page displayed by the first web browser 240. The web page displayed by the first web browser 240 includes the URL of the information processing system 20, and the second web browser 250 connects to this URL.

The first inter-browser cooperation unit 14a transmits and receives information to and from the second inter-browser cooperation unit 14b of the second web browser 250. One user terminal 10 can simultaneously execute multiple web browsers. The first inter-browser cooperation unit 14a transmits information to the second inter-browser cooperation unit 14b (and vice versa). When only the first web browser 240 holds authentication information to a specific web site (for example, the application service 40), the first inter-browser cooperation unit 14a and the second inter-browser cooperation unit 14b enable the second web browser 250 to communicate with the specific web site in cooperation with the first web browser 240. It is assumed that the first web browser 240 communicates with the application service 40 and the second web browser 250 communicates with the generative AI system 50 via the information processing system 20. The second web browser 250 can transmit the response message from the generative AI system 50 to the first web browser 240 by using the second inter-browser cooperation unit 14b. The functions of the first inter-browser cooperation unit 14a and the second inter-browser cooperation unit 14b are implemented by execution of codes in the scripts transmitted from the application service 40 and the information processing system 20, respectively.

The second web browser 250 includes a second communication unit 11b, a second display control unit 12b, a second operation receiving unit 13b, and a second inter-browser cooperation unit 14b. These functional units provide functions or means implemented by the CPU 501 illustrated in FIG. 4 executing a script included in a web page that the user terminal 10 obtains from the information processing system 20. The second communication unit 11b transmits and receives various types of information to and from the information processing system 20. In the present embodiment, the first communication unit 11a receives the screen information of the chat screen 630 from the information processing system 20. The second communication unit 11b transmits a chat message to the information processing system 20 and receives a function call request from the information processing system 20.

The second display control unit 12b interprets screen information of, for example, a web page displayed by the second web browser 250 and displays the web page on the display 506. The second operation receiving unit 13b receives various operations made by the user on the web page displayed on the display 506.

The second inter-browser cooperation unit 14b has a function like that of the first inter-browser cooperation unit 14a. The second inter-browser cooperation unit 14b transmits the function call request received from the information processing system 20 to the first inter-browser cooperation unit 14a.

### Information Processing System

The information processing system 20 includes the communication unit 21, the screen generation unit 22, the chat control unit 23, the setting information storage unit 24, and the setting information generation unit 28. These functional units function like those in FIG. 19.

### Operation or Processing

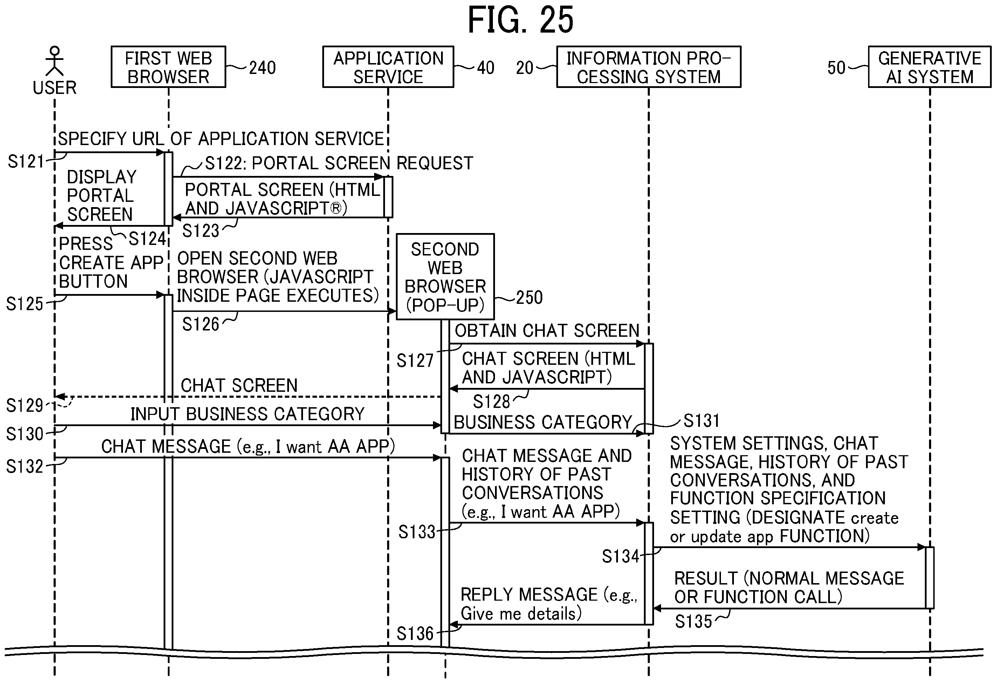

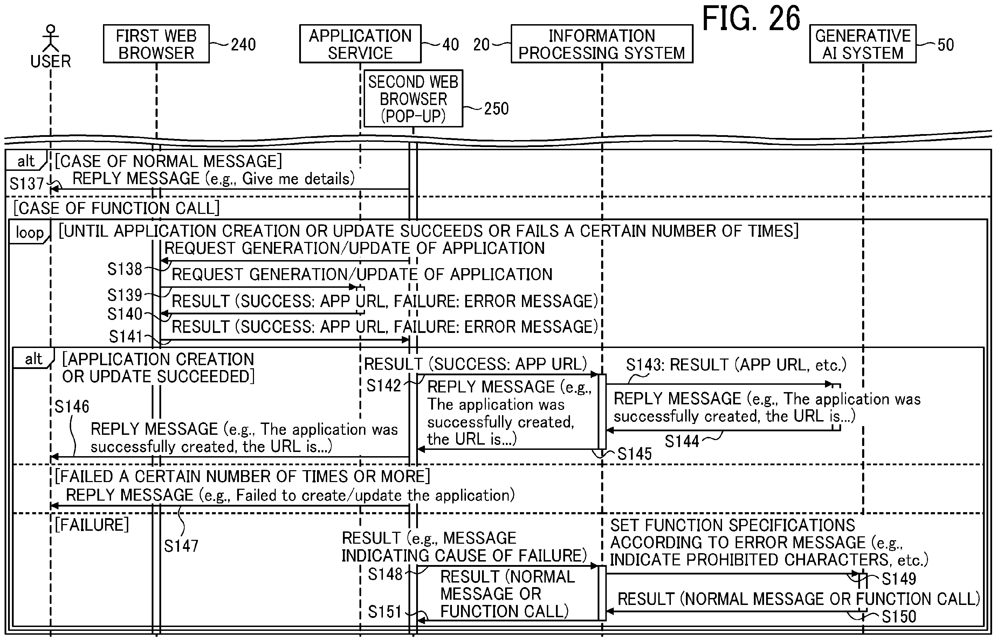

FIGS. 25 and 26 are sequence diagrams of an example of a process in which the information processing system 20 generates or updates an application in the application service 40 by using the cooperation of two web browsers on the user terminal 10. In the description with reference to FIGS. 25 and 26, the differences from FIG. 22 are focused. Steps S36 to S49 are repeatedly executed as a major process.

S121: The user specifies the URL of the application service 40 on the user terminal 10. The web browser connected to the application service 40 is the first web browser 240.

S122: The first communication unit 11a of the first web browser 240 connects to the URL of the application service 40. Since the user instructs the URL of the portal screen 330 (see FIG. 23) to the user terminal 10, the first communication unit 11a transmits an HTTP request including the URL of the portal screen 330 to the application service 40.

S123: When receiving the HTTP request from the user terminal 10, the application service 40 transmits screen information (described in, for example, HTML, JAVASCRIPT, and CSS) of the portal screen 330 to the user terminal 10. The screen information includes a script for activating the second web browser 250 and the URL of the chat screen.

S124: The first communication unit 11a of the first web browser 240 receives the screen information of the portal screen 330, and the first display control unit 12a of the first web browser 240 displays the portal screen 330.

S125: The user presses the application creation button 331 labeled "application creation support by AI" on the portal screen 330. The first operation receiving unit 13a receives the pressing operation.

S126: Thus, the activation unit 15 activates the second web browser 250. The first inter-browser cooperation unit 14a notifies the second web browser 250 of the URL of the chat screen 630 included in the portal screen 330. The second web browser 250 pops up. More specifically, the second web browser 250 is launched by the first web browser 240 executing JAVASCRIPT included in the screen information of the portal screen 330.

S127: The second communication unit 11b of the second web browser 250 requests the chat screen 630 from the information processing system 20 by using the URL of the chat screen 630 notified from the first web browser 240.

S128: The screen generation unit 22 of the information processing system 20 generates screen information (described in, for example, HTML, JAVASCRIPT, and CSS) of the chat screen 630. The communication unit 21 transmits the screen information of the chat screen 630 to the second web browser 250 (the user terminal 10).

S129: The second communication unit 11b of the second web browser 250 receives the screen information of the chat screen 630. Based on the screen information, the second display control unit 12b displays the chat screen 630 including the message 631 "Tell me the business category you work in" and the message 633 "Tell me your job field" illustrated in FIG. 23.

S130: The user inputs, to the user terminal 10, the business category and the job field to the second web browser 250 in response to the messages 631 and 633 urging to input.

The input may be performed using a keyboard or by voice. The second operation receiving unit 13b receives the business category and the job field. The user performs the operation of transmitting the business category and the job field.

S131: The second communication unit 11b of the second web browser 250 generates a request message including the business category and the job field and transmits the generated request message to the information processing system 20. The second communication unit 11b transmits the generated request message as, for example, an HTTP request.

S132: The user inputs a chat message such as "I want XX application" to the application creation page 310 (see FIG. 11), which is displayed subsequent to the chat screen 630.

The process after the user terminal 10 displays the application creation page 310 is like that in FIG. 22. In the description of FIGS. 25 and 26, differences from FIG. 22 are focused. Steps S133 to S136 may be like steps S106 to S109 in FIG. 22.

S133: The second communication unit 11b of the second web browser 250 transmits the chat message and the history of past conversations to the information processing system 20.

S134: The communication unit 21 of the information processing system 20 receives the chat message and the history of past conversations. The communication unit 21 of the information processing system 20 passes the chat message and the history of past conversations to the chat control unit 23. The setting information generation unit 28 generates system settings in accordance with the business category/job field information 232 received in step 131 and the setting information stored in the setting information storage unit 24. The chat control unit 23 generates a request message including the system settings (setting information), the chat message, the history of past conversations, and the function specification setting, and transmits the generated request message to the generative AI system 50 by calling the first API 26 (see FIG. 19).

S135: The generative AI system 50 returns a response message to the information processing system 20 (see FIG. 7). The response message includes either a reply message or a function call request. The chat control unit 23 receives the response message from the generative AI system 50. This response message includes either a reply message or a function call request.

S136: The communication unit 21 of the information processing system 20 transmits a response message including a normal reply message or a function call request to the second web browser 250. In the case of a reply message, the process proceeds to step S137. In the case of a function call request, the process proceeds to step S138.

S137: When the second web browser 250 receives a reply message as the response message from the generative AI system 50 in step S136, the second display control unit 12b of the second web browser 250 displays the reply message (for example, Give me details).

S138: When the second web browser 250 receives a function call request as the response message from the generative AI system 50 in step S136, the second inter-browser cooperation unit 14b of the second web browser 250 transmits to the first web browser 240 a request of generating or updating the application in the application service 40. As such cooperation (message communication) between browsers, Window: postMessage() method is described at https://developer.mozilla.org/ja/docs/web-API/Window/postMessage.

S139: The first inter-browser cooperation unit 14a of the first web browser 240 receives the request to generate or update the application, and the application generation unit 25 calls the second API 27 to generate or update the application in the application service 40.

S140: The application service 40 transmits a result indicating the success or failure of the generation or update of the application to the application generation unit 25 of the first web browser 240. The URL of the application is returned when the generation or update of the application is successful, and an error message is returned when not successful.

S141: The first inter-browser cooperation unit 14a of the first web browser 240 transmits the result relating to the generation or update of the application to the second web browser 250. When the generation or update is successful, the process proceeds to step S142, and when unsuccessful, the process proceeds to step S148.

S142: The second inter-browser cooperation unit 14b of the second web browser 250 receives the result indicating the success (URL of the application), and the second communication unit 11b of the second web browser 250 transmits the result (success) of the generation or update of the application to the information processing system 20. Accordingly, in the process of FIG. 26, the information processing system 20 receives the result from the user terminal 10 (the second web browser 250) instead of the application service 40. The process from S143 to S145 is like that from S112 to S114 in FIG. 22.

S146: The second communication unit 11b of the second web browser 250 receives the reply message. The second display control unit 12b displays the reply message on the application creation page 310. The process of FIG. 26 ends in step S146. To update the application, the user returns to step S132 as desired.

S147: When the second web browser 250 receives the result (indicating success or failure) of the step S141, the second inter-browser cooperation unit 14b determines whether the results indicating the failure are consecutively received a certain number of times or more. When the results indicating the failure are consecutively received a certain number of times or more, the second display control unit 12b displays on the application creation page 310 a message indicating the result such as "Failed to create/update the application." Then, the process of FIG. 26 ends. To create an application again, the user returns to step S132 as desired.

S148: When the second inter-browser cooperation unit 14b of the second web browser 250 receives the result indicating failure (error message), the second communication unit 11b of the second web browser 250 transmits the result (failure) of the generation or update of the application to the information processing system 20. The process from S149 and S150 is like that from S116 to S117 in FIG. 22.

S151: The information processing system 20 transmits a function call request or a normal reply message to the second web browser 250. In the case of a function call request, the process proceeds to step S138. In the case of a reply message, the process proceeds to step S141.

After that, in a repetitive process, the information processing system 20 similarly generates or updates the application in the application service 40 by requesting the user terminal 10 to generate or update the application.

Although an example in which the second web browser 250 pops up has been described with reference to FIGS. 25 and 26, a capability called "inline frame (iframe)" supported by a web browser may be used. The iframe (inline frame) is defined by an element (tag) of HTML and is the function of displaying another web page or contents (e.g., text, an image, or a moving image) in a web page. When another web page is embedded in the web page, the chat screen that is another site can be displayed in the portal screen of the application service 40. For the communication between windows in this case, postMessage is known. The sequence in this case may be like that illustrated in FIG. 22.

In addition to providing the effects of the first embodiment, the information processing system 20 according to the present embodiment can generate an application even when the application service 40 and the information processing system 20 provide their services from Web sites of different domains.

The application generation system 100 according to the present embodiment can develop an application from a natural language conversation between the user and the generative AI system 50. Since the information processing system 20 designates a function to the generative AI system 50, the generative AI system 50 can request the information processing system 20 to call the function together with the field name of the application. Then, the information processing system 20 generates or updates the application. Accordingly, the present embodiment can provide a no-code or low-code platform for a use to develop a daily report app by inputting a message "Create an example daily report app."

### Applied Cases

Although the example embodiments of the present invention are described above, the above-described embodiments are not intended to limit the scope of the present invention. Thus, numerous modifications and replacements of elements are possible within the scope of the present invention.

For example, although the user inputs chat messages in a natural language in the present embodiment, alternatively, the user may transmit, for example, an image (e.g., a photograph, handwriting, or a snapshot) representing a screen of an application to the information processing system 20 and request generation of the application. The information processing system 20 transmits the screen of the application to the generative AI system 50, and the generative AI system 50 analyzes the screen of the application and transmits a function call request to the information processing system 20. The generative AI system 50 can include the field name and the data format extracted from the screen of the application in the function call request. Further, a file may be transmitted as a chat message.

For example, although the user inputs chat messages in a natural language in the present embodiment, the user may input voice. When the user inputs voice (speech) to the user terminal 10, the user terminal 10 transmits the voice to the information processing system 20. Then, the information processing system 20 converts the received voice into text and generates a request message including the converted text. The generated request message is transmitted to the generative AI system 50.

Further, when the generative AI system 50 supports voice input, the information processing system 20 may transmit the received voice to the generative AI system 50.

Although the user explicitly requests the information processing system 20 to generate an application such as "I want XX app in the present embodiment, the user does not necessarily have to explicitly specify. For example, when the user transmits a chat message "data input is troublesome" to the information processing system 20, the information processing system 20 or the generative AI system 50 detects the inconvenience. When determining that the inconvenience can be solved by the generation of an application, the information processing system 20 or the generative AI system 50 proposes the generation of a new application to the user.

In the present embodiment, the information processing system 20 transmits the URL of the application to the generative AI system 50, but any access information for accessing the application may be used. For example, when the application service 40 returns the identifier (ID) of the generated application to the information processing system 20, the information processing system 20 transmits the ID of the application to the generative AI system 50.

The information processing system 20 transmits the ID of the application included in the response message from the generative AI system 50 to the user terminal 10. When the user terminal 10 requests the execution of an application by designating the ID of the application, the information processing system 20 converts the ID into the URL of the application and returns the URL to the user terminal 10.

Although the information processing system 20 receives a function call request from the generative AI system 50 in the present embodiment, alternatively, the information processing system 20 may receive a request of calling the Web-API from the generative AI system 50. In other words, the function and the API may not be strictly distinguished from each other.

The apparatuses or devices described in one embodiment are just one example of multiple computing environments that implement the one embodiment in this specification. In some embodiments, the information processing system 20 includes multiple computing devices, such as a server cluster. The multiple computing devices communicate with one another through any type of communication link including, for example, a network and a shared memory, and perform the processes disclosed in the present disclosure.

Further, the information processing system 20 can be configured to share the steps in the process (e.g., steps in FIG. 22) in the above-described embodiments in various combinations. For example, a process performed by a predetermined unit may be performed by multiple information processing apparatuses included in the information processing system 20. Further, the elements of the information processing system 20 may be implemented by one server apparatus or are allocated to multiple apparatuses.

The functional configurations illustrated in, for example, FIG. 19 are illustrated in blocks divided according to functions in order to facilitate understanding of processing performed by the information processing system 20. No limitation is intended by how the processing units are divided by the unit of process or by the name. The processing units implemented by the information processing system 20 can be divided to a larger number of processing units depending on the contents of processing. Further, a single processing unit can be divided into multiple processing units.

Each of the functions of the described embodiments may be implemented by one or more processing circuits or circuitry. The "processing circuit or circuitry" in the present specification includes a programmed processor to execute each function by software, such as a processor implemented by an electronic circuit, and devices, such as an application-specific integrated circuit (ASIC), a digital signal processor (DSP), a field programmable gate array (FPGA), and conventional circuit modules arranged to perform the recited functions.

A configuration example in which the application service 40 and the information processing system 20 are integrated will be described. Although the information processing system 20 includes the functions of the application service 40 in the following description, alternatively, the application service 40 may include the functions of the information processing system 20.

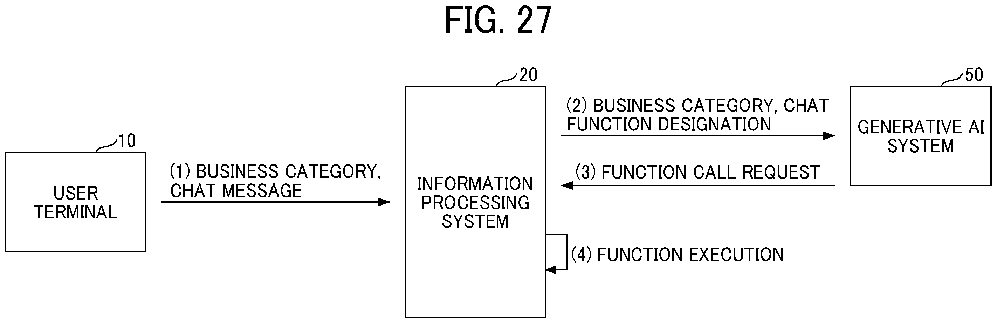

FIG. 27 is a diagram illustrating a process from when a generative AI system 50 requests an information processing system 20 to execute a function in response to a chat message input by a user to when the information processing system 20 generates an application. The operations (1) to (3) may be like those described with reference to FIGS. 1 and 18.

(4) The information processing system 20 generates an application in response to the function call request included in the response message transmitted from the generative AI system 50. More specifically, the information processing system 20 executes a function for generating an application from the content of the function call request (function call). In the configuration illustrated in FIG. 27, the information processing system 20 itself generates or updates an application.

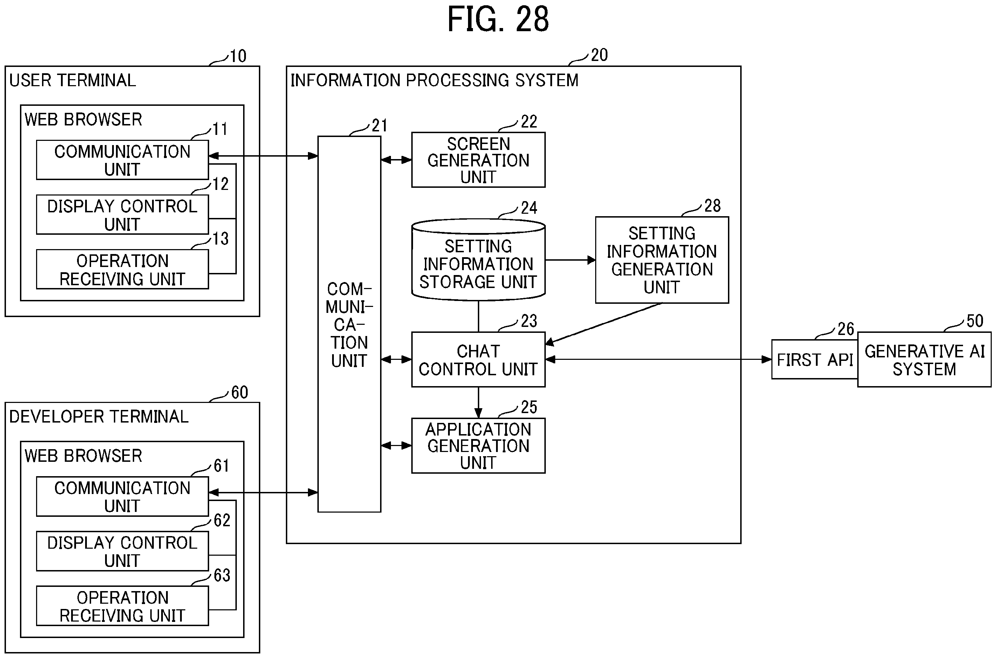

FIG. 28 is a block diagram illustrating an example of functional configurations of the information processing system 20, the user terminal 10, and the developer terminal 60 when the application service 40 and the information processing system 20 are integrated. In the description referring to FIG. 28, for simplicity, differences from FIG. 19 are focused. Since the information processing system 20 and the application service 40 are integrated, the application generation unit 25 does not call the second API 27. The functions of the communication unit 21, the screen generation unit 22, the setting information storage unit 24, the chat control unit 23, and the setting information generation unit 28 can be like those in FIG. 19.

The application generation unit 25 in FIG. 28 is implemented as a predefined function is executed. Parameters to be input to the function to be executed include a field name of the database and a data format.

Embodiments of the present disclosure can provide significant improvements in computer capability and functionality. These improvements allow users to take advantage of computers that provide more efficient and robust interaction with tables that is a way to store and present information on information processing apparatuses. In addition, the embodiments of the present disclosure can provide a better operator experience through the use of a more efficient, powerful, and robust user interface. Such a user interface provides a better interaction between a human and a machine.

According to Aspect 1, an information processing apparatus that communicates with a communication terminal and a generative AI system via a network includes an application generation unit and a chat control unit.

The application generation unit is implemented by execution of a predefined function, and generates an application based on a parameter included in a request relating to generating an application.

The chat control unit transmits, in response to receiving a chat message transmitted from the communication terminal, the received chat message to the generative AI system.

The chat control unit transmits, to the generative AI system, setting information for generating the application and information for calling the function at least once.

When the chat control unit receives, from the generative AI system, the request based on the chat message, the setting information, and the information for calling the function, the application generation unit generates the application based on the parameter included in the received request.

According to Aspect 2, in the information processing apparatus of Aspect 1, in response to receiving, from the generative AI system, a reply message to the chat message transmitted to the generative AI system, the chat control unit transmits the reply message to the communication terminal.

According to Aspect 3, in the information processing apparatus of Aspect 2, the chat control unit transmits, to the generative AI system, access information for accessing the generated application in order to enable the generative AI system to include the access information in the reply message.

According to Aspect 4, in the information processing apparatus of Aspect 3, in response to receiving, from the generative AI system, the reply message including the access information as a response to the transmission of the access information to the generative AI system, the chat control unit transmits the reply message including the access information to the communication terminal.

According to Aspect 5, in the information processing apparatus of any one of Aspects 1 to 4, the information for calling the function includes a specification setting of functions to be called by the generative AI system, a function call request for calling the function that the generative AI system transmits based on the specification setting of functions to the information processing apparatus includes a request relating to generating the application, and the chat control unit receives the request relating to generating the application from the generative AI system.

According to Aspect 6, in the information processing apparatus of Aspect 3, when the chat control unit receives the request relating to generating the application from the generative AI system, the application generation unit generates the application corresponding to the request, based on the parameter, and when the chat control unit receives, from the generative AI system, the reply message to the chat message not the request relating to generating the application, and the chat control unit transmits the reply message to the communication terminal.

According to Aspect 7, the information processing apparatus of any one of Aspects 1 to 6, when the application generation unit fails to generate the application, the chat control unit transmits, to the generative AI system, an error message obtained due to a failure in generation of the application and the chat message received again, and receives a request relating to generating the application.

According to Aspect 8, in the information processing apparatus of any one of Aspect 1 to 6, when the application generation unit fails to generate the application a predetermined number of times, the chat control unit transmits a notification indicating that the generation of the application has failed to the communication terminal.

According to Aspect 9, in the information processing apparatus of any one of Aspects 1 to 7, when the application is an application in which data is registered in a table,

the parameter is one or more field names of the table.

According to Aspect 10, the information processing apparatus of any one of Aspects 1 to 8 communicates with an application service that executes the application via a network, and the application generation unit specifies the parameter and requests the application service to generate the application.

According to Aspect 11, in the information processing apparatus of Aspect 10, the communication terminal executes a first web browser that communicates with the application service and a second web browser activated by the first web browser, and the information processing apparatus receives the chat message from the second web browser.

When the chat control unit receives the request relating to generating the application transmitted from the generative AI system, the application generation unit transmits the request relating to generating the application to the second web browser, the second web browser transmits the request relating to generating the application to the first web browser, and the first web browser transmits the request relating to generating the application to the application service.

According to Aspect 12, the information processing apparatus of Aspect 1 further includes a setting information generation unit configured to generate setting information for generating the application. The chat control unit displays an instruction urging to input precondition information for generating the application on a screen for receiving an input of the chat message. The setting information generation unit generates the setting information including the precondition information input in response to the instruction. The chat control unit transmits, to the generative AI system, the setting information and the information for calling the function at least once. When the chat control unit receives, from the generative AI system, the request based on the chat message, the setting information, and the information for calling the function, the application generation unit generates the application based on the parameter included in the received request.

According to Aspect 13, in the information processing apparatus of Aspect 12, the precondition information indicates at least one of a business category in which the application is used, a job field in which the application is used, a task in which the application is used, work of a user of the communication terminal, and a name of the application.

Any one of the above-described operations may be performed in various other ways, for example, in an order different from the one described above.

The present invention can be implemented in any convenient form, for example using dedicated hardware, or a mixture of dedicated hardware and software. The present invention may be implemented as computer software implemented by one or more networked processing apparatuses. The processing apparatuses include any suitably programmed apparatuses such as a general-purpose computer, a personal digital assistant, a Wireless Application Protocol (WAP) or third-generation (3G)-compliant mobile telephone, and so on. Since the present invention can be implemented as software, each and every aspect of the present invention thus encompasses computer software implementable on a programmable device. The computer software can be provided to the programmable device using any conventional carrier medium (carrier means). The carrier medium includes a transient carrier medium such as an electrical, optical, microwave, acoustic or radio frequency signal carrying the computer code. An example of such a transient medium is a Transmission Control Protocol/Internet Protocol (TCP/IP) signal carrying computer code over an IP network, such as the Internet. The carrier medium may also include a storage medium for storing processor readable code such as a floppy disk, a hard disk, a compact disc read-only memory (CD-ROM), a magnetic tape device, or a solid-state memory device.

## Claims

1. An information processing apparatus (20) configured to communicate with a communication terminal and a generative artificial intelligence (AI) system via a network, the information processing apparatus (20) comprising:
a chat control unit (23) configured to:
receive a chat message input to the communication terminal;
transmit the chat message to the generative AI system;
transmit, to the generative AI system, at least once:
information for calling a function to be executed for generating an application based on a parameter included in a request relating to generating the application; and
setting information for generating the parameter; and
receive, from the generative AI system, the request based on the received chat message, the setting information, and the information for calling the function; and
an application generation unit (25) configured to execute the function to generate the application based on the parameter included in the request received from the generative AI system.

2. The information processing apparatus (20) according to claim 1,
wherein the chat control unit (23) is configured to transmit, to the communication terminal, a reply message generated by the generative AI system as a response to the chat message transmitted to the generative AI system.

3. The information processing apparatus (20) according to claim 2,
wherein the chat control unit (23) is configured to transmit, to the generative AI system, access information for accessing the generated application, the access information to be included in the reply message of the generative AI system.

4. The information processing apparatus (20) according to claim 3,
wherein, in response to receiving, from the generative AI system, the reply message including the access information as the response to transmission of the access information to the generative AI system, the chat control unit (23) is configured to transmit the reply message including the access information to the communication terminal.

5. The information processing apparatus (20) according to any one of claims 1 to 4,
wherein the information for calling the function includes a specification setting of the function called by the generative AI system, and
wherein the request relating to generating the application is included in a function call request for calling the function transmitted to the information processing apparatus (20), the function call request generated by the generative AI system based on the specification setting of functions.

6. The information processing apparatus (20) according to claim 3,
wherein, when the chat control unit (23) receives the request relating to generating the application from the generative AI system, the application generation unit (25) is configured to generate the application corresponding to the request, based on the parameter; and
wherein the chat control unit (23) is configured to:
determine whether the response of the generative AI system to the chat message includes the reply message or the request relating to generating the application; and
based on a determination result indicating that the response includes the reply message, the chat control unit (23) is configured to transmit the reply message to the communication terminal.

7. The information processing apparatus (20) according to any one of claims 1 to 6,
wherein, when the application generation unit (25) fails to generate the application, the chat control unit (23) is configured to transmit, to the generative AI system, an error message indicating failure in generating the application and the chat message, and receive another request relating to generating the application as a response to the error message and the chat message.

8. The information processing apparatus (20) according to any one of claims 1 to 6,
wherein, when the application generation unit (25) fails to generate the application a predetermined number of times, the chat control unit (23) is configured to transmit a notification indicating that generating the application has failed to the communication terminal.

9. The information processing apparatus (20) according to any one of claims 1 to 7,
wherein, when the application is an application in which data is registered in a table, the parameter is one or more field names of the table.

10. The information processing apparatus (20) according to any one of claims 1 to 8,
wherein the information processing apparatus (20) is configured to communicate via the network with an application service that executes the application; and
wherein the application generation unit (25) is configured to request the application service to generate the application by specifying the parameter.

11. The information processing apparatus (20) according to claim 10,
wherein the communication terminal executes a first web browser that communicates with the application service and a second web browser activated by the first web browser;
wherein the information processing apparatus (20) is configured to receive the chat message from the second web browser; and
wherein, when the chat control unit (23) receives the request relating to generating the application transmitted from the generative AI system:
the application generation unit (25) is configured to transmit the request relating to generating the application to the second web browser,
the second web browser transmits the request relating to generating the application to the first web browser, and
the first web browser transmits the request relating to generating the application to the application service.

12. The information processing apparatus (20) according to claim 1, further comprising a setting information generation unit (28) configured to generate the setting information for generating the parameter,
wherein the chat control unit (23) is configured to display an instruction urging to input precondition information for generating the application on a screen for receiving an input of the chat message, and
wherein the setting information generation unit (28) is configured to generate the setting information including the precondition information input in response to the instruction.

13. The information processing apparatus (20) according to claim 12,
wherein the precondition information indicates at least one of a business category in which the application is used, a job field in which the application is used, a task in which the application is used, work of a user of the communication terminal, and a name of the application.

14. A method for generating an application, the method comprising:
receiving (S3) a chat message input to a communication terminal via a network from the communication terminal;
transmitting (S4) the chat message to a generative AI system via the network;
transmitting (S4), to the generative AI system, at least once:
information for calling a function to be executed for generating an application based on a parameter included in a request relating to generating the application; and
setting information for generating the parameter;
receiving (S5), from the generative AI system, the request generated by the generative AI system based on the chat message, the setting information, and the information for calling the function; and
executing (S7) the function to generate the application based on the parameter included in the request received from the generative AI system.

15. A carrier medium carrying computer readable codes which, when executed by a computer system, cause the computer system to carry out the method according to claim 14.
